(19) Europäisches Patentamt / European Patent Office / Office européen des brevets

(11) **EP 2 730 928 B1**

(12) **EUROPEAN PATENT SPECIFICATION**

(45) Date of publication and mention of the grant of the patent:
**13.01.2016 Bulletin 2016/02**

(21) Application number: **11869272.2**

(22) Date of filing: **08.07.2011**

(51) Int Cl.:
*G01P 15/125* (2006.01)     *B81B 3/00* (2006.01)
*G01C 19/56* (2012.01)     *G01P 15/18* (2006.01)

(86) International application number:
**PCT/JP2011/003918**

(87) International publication number:
**WO 2013/008263 (17.01.2013 Gazette 2013/03)**

(54) **PHYSICAL QUANTITY SENSOR AND PHYSICAL QUANTITY DETECTION METHOD**

SENSOR FÜR PHYSIKALISCHE GRÖSSEN UND VERFAHREN ZUR ERKENNUNG PHYSIKALISCHER GRÖSSEN

CAPTEUR ET PROCÉDÉ DE DÉTECTION D'UNE QUANTITÉ PHYSIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.05.2014 Bulletin 2014/20**

(73) Proprietor: **Hitachi, Ltd.**
**Tokyo 100-8280 (JP)**

(72) Inventors:
• **MAEDA, Daisuke**
**Tokyo 100-8280 (JP)**
• **OSHIMA, Takashi**
**Tokyo 100-8280 (JP)**
• **NAKAGAWA, Tatsuo**
**Tokyo 100-8280 (JP)**
• **ISOBE, Atsushi**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**JP-A- 2002 536 870     JP-A- 2003 215 156**
**JP-A- 2003 215 156     JP-A- 2004 286 581**
**JP-A- 2006 084 400     JP-A- 2006 093 887**
**JP-A- 2007 322 295     JP-A- 2009 005 103**
**JP-A- 2009 005 103     JP-A- 2010 101 737**
**JP-A- 2011 038 872     US-A- 5 537 083**
**US-A- 5 936 518**

**Description**

## TECHNICAL FIELD OF THE INVENTION

The present invention relates to a sensor which detects multiple physical quantities. The present invention particularly relates to a sensor which detects inertial quantities such as acceleration, angular velocity and others by multiple axes.

## BACKGROUND OF THE INVENTION

Sensor devices which detect physical quantities have been developed by the integration of semiconductor techniques and circuit techniques referred to as the so-called MEMS (Micro Electro Mechanical Systems). In particular, as sensor devices for drive control of automobiles and sensor devices for posture detection of mobile terminals, sensors which detect physical quantities such as acceleration and angular velocity are industrially beneficial.

The physical-quantity sensor is desired to have sensitivity in multiple axis directions for sensing the state or posture of a measurement object. For example, when estimating the posture of a mobile terminal, by using the fact that gravity of 1G (about 9.8 m/s^2) is always applied in the Z-axis direction, the acceleration in three axes of X-, Y-, and Z-axes is measured and the calculation of an inverse trigonometric function is carried out.

As described above, the sensor capable of detecting the physical quantities in multiple axes is industrially very important, but there has been a problem that the configuration thereof is complicated. For example, when acceleration in the three axis directions is to be detected, simply, a sensor configuration in one axis has to be prepared so as to have sensitivity in each axis direction. This means that the cost of detection units and circuit units is multiplied approximately by N with respect to the number of axes N.

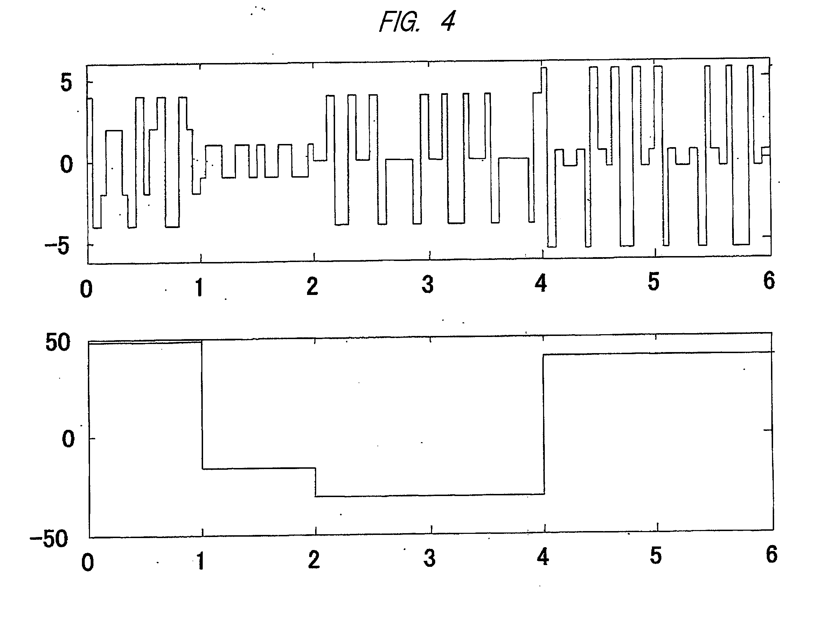

Against the problem mentioned above, Patent Document 1 describes techniques in which carrier waves from an x-axis detection circuit 107, a y-axis detection circuit 108, and a z-axis detection circuit 109 are subjected to current/voltage conversion by a single current/voltage converting circuit 110 (FIG. 4). The signals converted by the current/voltage converting circuit in this manner contain an x-axis component (Vxout), a y-axis component (Vyout), and a z-axis component (Vzout). On the other hand, first, the carrier waves applied to the x-axis detection circuit and the y-axis detection circuit are assumed to be shifted by 90 degrees from the phase of the carrier wave applied to the z-axis detection circuit. Next, in a synchronous detection circuit 114, signals of z-axis components are obtained by using clock signals synchronized with the carrier waves. Then, the clock signals are switched in a switching circuit 106 by time division, and in synchronous detection circuits 112 to 113, signals of x-axis components and y-axis components are obtained by using clock signals corresponding to respective on-periods.

Also, against the problem mentioned above, Non-Patent Document 1 describes the technique in which a single A/D converter ADC is shared by a plurality of detection units and detection signals are subjected to time division, and thereby obtaining the signals of desired axis components.

**Prior-Art Document**

**Patent Document**

Patent Document 1: Japanese Patent Application Laid-Open Publication No. 2007-240518

**Non-Patent Document**

Non-Patent Document 1: Paavola M., Kamarainen M., Jarvinen J.A.M., Saukoski M., Laiho M, Halonen K.A.I., "A Micropower Interface ASIC for a Capacitive 3-Axis Micro-Accelerometer," Solid-State Circuits, IEEE Journal of, vol. 42, no. 12, pp. 2651-2665, Dec. 2007

JP 2003 215156 A describes a measuring instrument that selects one line out of three lines of independent energizing electrodes provided in a ball sensor of three inputs and one output in order in every measuring period of a prescribed cycle, and has switches for connecting the energizing electrodes to an electric power source.

JP 2009 005103 A describes a wireless communication base station apparatus that includes: an FDE-reverse diffusion part for performing frequency area equalization and reverse diffusion with respect to a superimposition signal; and a separating/synthesizing part for separating the superimposition signal after the frequency area equalization.

## SUMMARY OF THE INVENTION

## PROBLEMS TO BE SOLVED BY THE INVENTION

In a method utilizing the difference in the phase of carrier waves like the technique described in Patent Document 1, multiplexing (sharing at least part of the circuit with respect to multiple axis components) of ADC (the same with current/voltage converting circuit, capacitance/voltage converting circuit, or amplifier circuit) can be carried out only up to two axes at most. This is for a reason that a carrier wave orthogonal to both of the original carrier wave and the carrier wave whose phase has been shifted by 90 degrees cannot be generated. Therefore, for the components of the third and subsequent axes, multiplexing by time division like that carried out for the x-axis components and y-axis components in Patent Document 1 and that carried out for the respective axis components in Non-Patent Document 1 is required.

However, since detection signals are not continued in terms of time, the multiplexing by time division has a problem that it is difficult to apply a filter having a feedback configuration such as $\Delta\Sigma$ modulator having excellent quantization error characteristics.

Further, instead of the multiplexing by time division, multiplexing in which carrier waves of different frequencies are applied to respective detection units and synchronous detection is carried out by using the same frequency signals after amplification is also conceivable.

However, since the carrier waves of multiple frequencies are used, the multiplexing by the frequencies has a problem that interference between the carrier waves tends to occur. In particular, since the multiple frequencies are generated, this problem becomes obvious when the carrier waves with the frequency obtained by multiplying a reference frequency by a constant are used.

The present invention has been made to solve such problems and provides a combined sensor circuit having detection units of multiple axes with higher precision or at low cost.

## MEANS FOR SOLVING THE PROBLEMS

For the solution of the above-described problems, for example, the configuration described in claims is adopted. The present application includes a plurality of means for solving the above-described problems, and an example thereof is a physical-quantity sensor including: a first detection element having a first movable part which responds to a first physical quantity and a first electrode to which a voltage encoded by a first code is applied; a second detection element having a second movable part which responds to a second physical quantity different from the first physical quantity and a second electrode to which a voltage encoded by a second code orthogonal to the first code is applied; a first converting unit which receives an output voltage from the first detection element and an output voltage from the second detection element and converts the output voltages to a first digital signal; a first decoding unit which decodes the first digital signal by the first code; and a second decoding unit which decodes the first digital signal by the second code.

Alternatively, another example is a physical-quantity sensor including: a first detection element having a first movable part which responds to a first physical quantity and a first electrode to which a voltage encoded by a first code is applied; a second detection element having a second movable part which responds to a second physical quantity different from the first physical quantity and a second electrode to which a voltage encoded by a second code different from the first code is applied; a first converting unit which receives an output voltage from the first detection element and an output voltage from the second detection element and converts the output voltages to a first digital signal; a first decoding unit which decodes the first digital signal by the first code; and a second decoding unit which decodes the first digital signal by the second code, characterized in that the first code and the second code are spread codes having randomness.

Alternatively, another example is a detecting method of physical quantity, including: (a) a step of applying a voltage encoded by a first code to a first electrode of a first detection element having a first movable part which responds to a first physical quantity; (b) a step of applying a voltage encoded by a second code orthogonal to the first code to a second electrode of a second detection element having a second movable part which responds to a second physical quantity different from the first physical quantity; (c) a step of superimposing an output voltage from the first detection element and an output voltage from the second detection element on each other; (d) a step of converting a signal obtained by the superimposition in the step (c) to a first digital signal; (e) a step of decoding the first digital signal by the first code; and (f) a step of decoding the first digital signal by the second code.

## EFFECTS OF THE INVENTION

According to the present invention, it is possible to provide a sensor which detects multiple physical quantities with higher precision or at low cost.

## BRIEF DESCRIPTIONS OF THE DRAWINGS

FIG. 1 is a drawing showing a configuration of a sensor;

FIG. 2 is a drawing showing a signal of a detection element, an orthogonal code superimposed thereon, and a superimposition result of the signal and the orthogonal code in this order from an upper side;

FIG. 3 is a drawing showing a signal of a detection element, an orthogonal code superimposed thereon, and a superimposition result of the signal and the orthogonal code, which are different from those of FIG. 2, in this order from an upper side;

FIG. 4 is a drawing showing a signal obtained by adding the signal obtained by superimposing the orthogonal code on the signal of FIG. 2 and the signal obtained by superimposing the orthogonal code on the signal of FIG. 3 and the result of obtaining the inner product of the above-described signal and the orthogonal code superimposed in FIG. 2 in this order from an upper side;

FIG. 5 is a drawing showing a configuration from a voltage generating unit to an amplifier unit;

FIG. 6 is a drawing showing a configuration of a detection unit;

FIG. 7 is a drawing showing a configuration of a decoding unit;

FIG. 8 is a drawing showing a configuration of a sensor;

FIG. 9 is a drawing showing a configuration from a voltage generating unit to an amplifier unit;

FIG. 10 is a drawing showing a configuration from a voltage generating unit to an amplifier unit;

FIG. 11 is a drawing showing a configuration of a sensor;

FIG. 12 is a drawing showing a configuration of a MEMS filter;

FIG. 13 is a drawing showing a configuration in which a MEMS sensor and a MEMS filter are provided on a single chip; and

FIG. 14 is a drawing describing a state in which a trouble has occurred in a sensor.

## DESCRIPTIONS OF THE PREFERRED EMBODIMENTS

Hereinafter, embodiments of the present invention will be described with reference to drawings by taking a sensor which realizes 3-axis acceleration detection as an example. As described later, the techniques described in the present specification are not necessarily limited to an acceleration sensor, but can be applied also to sensors such as mass sensors and so-called bio-sensors in addition to an inertial-quantity sensors like an angular-velocity sensor.

First Embodiment

<Overall Configuration>

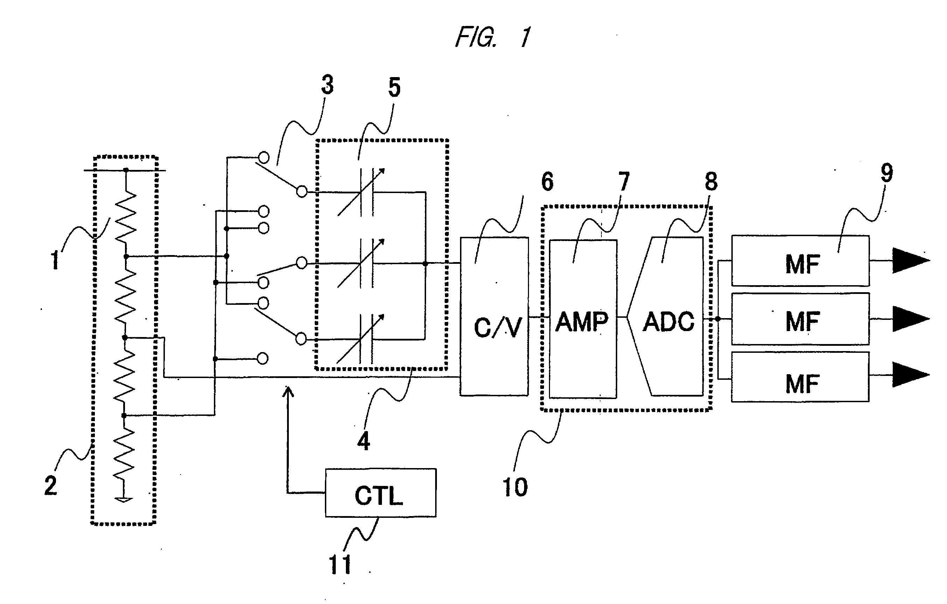

FIG. 1 shows a 3-axis acceleration sensor according to the first embodiment of the present invention. A reference numeral 1 denotes a voltage-dividing resistance, 2 denotes a voltage generating unit, 3 denotes an applied-voltage changing switch, 4 denotes a detection unit, 5 denotes a detection element unit, 6 denotes a C/V converting unit, 7 denotes an amplifier unit, 8 denotes an ADC unit, 9 denotes a decoding unit, 10 denotes a converting unit, and 11 denotes a control unit.

In the present embodiment, the detection unit 4 which detects acceleration from outside is, for example, a kind of an element referred to as so-called MEMS (Micro Electro Mechanical Systems) of an electrostatic capacitance type, which detects the displacement of a mass generated by application of acceleration as a capacitance change of the detection elements 5, and the detection unit 4 has a principle that the capacitance change thereof is converted to a voltage signal by the C/V (Capacitance to Voltage) converting unit 6. However, in the present configuration, orthogonal codes are superimposed on the voltages applied to the detection unit 4. This is realized by controlling the applied-voltage changing switches 3. The signals from the C/V converting unit 6 whose amplitudes have been amplified by the amplifier unit 7 are converted to digital signals through the ADC unit 8, and the encoded signals are decoded by the decoding units 9. Herein, the AD converting unit 10 is described as an inclusive term of the amplifier unit 7 and the ADC unit 8 and is a circuit which converts the analog signals, which are from the C/V converting unit 6, to the digital signals. However, as described later, since the amplifier unit 7 is not an essential constituent element, the amplifier unit 7 is not included in some cases. The control unit 11 is a circuit which carries out the above-described control to the applied-voltage changing switches 3. Since the control unit 11 independently controls the applied-voltage changing switches 3 corresponding to the respective detection elements 5, the voltages encoded by the mutually orthogonal codes can be applied to the respective detection elements 5. The control unit 11 may be a dedicated circuit or may be realized in terms of software.

In the physical-quantity sensor of FIG. 1, the plurality of detection elements 5 detect respectively different physical quantities. "Different" is used as the meaning that includes not only different types of physical quantities such as acceleration and angular velocity but also a single type of physical quantities in different directions such as X-direction acceleration and Y-direction acceleration. The analog signals on which the output voltages (the signals which have gone through the C/V converting unit 6) from the plurality of detection elements 5 are superimposed are subjected to digital conversion by the same converting unit 10.

In the configuration described above, the signals from the respective detection elements are encoded by the mutually orthogonal codes and decoded by corresponding codes in the decoding units 9. With this configuration, the physical-quantity sensor which can support multiple axes or three or more axes and does not cause problems due to time-division multiplexing, frequency multiplexing and others is provided. Reasons thereof will be described below.

<About Orthogonal Code>

The orthogonal codes refer to codes which are orthogonal to each other and are codes whose inner product between different codes is 0. Examples of the orthogonal codes include Hadamard orthogonal codes. The Hadamard orthogonal codes are obtained from rows of a matrix $H_N$ defined by (2) (N is a power of 2).
[Expression 1]

$$H_1 = \begin{bmatrix} 1 \end{bmatrix}$$

$$H_2 = \begin{bmatrix} 1 & 1 \\ 1 & -1 \end{bmatrix} \quad \cdots (2)$$

$$H_N = \begin{bmatrix} H_{N/2} & H_{N/2} \\ H_{N/2} & -H_{N/2} \end{bmatrix}$$

For example, a Hadamard matrix having a code length of 4 is represented by (3).
[Expression 2]

$$H_4 = \begin{bmatrix} 1 & 1 & 1 & 1 \\ 1 & -1 & 1 & -1 \\ 1 & 1 & -1 & -1 \\ 1 & -1 & -1 & 1 \end{bmatrix} \quad \cdots (3)$$

More specifically, orthogonal codes are vectors h1 = [1111], h2 = [1 -1 1 -1], h3 = [1 1 -1 -1], and h4 = [1 -1 -1 1] of the respective rows of this matrix. When there are certain N-dimensional vectors U = [uN, uN-1, ⋯, u2, u1] and V = [vN, vN-1, ⋯, v2, v1] and the inner product of U and V is defined as (4),
[Expression 3]

$$U \cdot V = \sum_{i=1}^{N} (ui \cdot vi) \quad \cdots (4)$$

the inner product of Hadamard orthogonal codes has a property to show (5).
[Expression 4]

$$\sum_{i=1}^{N} hm \cdot hn = N \quad (n = m) \atop \sum_{i=1}^{N} hm \cdot hn = 0 \quad (n \neq m) \Bigg\} \quad \cdots (5)$$

More specifically, in the example of N=4 shown in (3), the inner product of the same codes becomes 4, and the inner product of different orthogonal codes becomes 0.

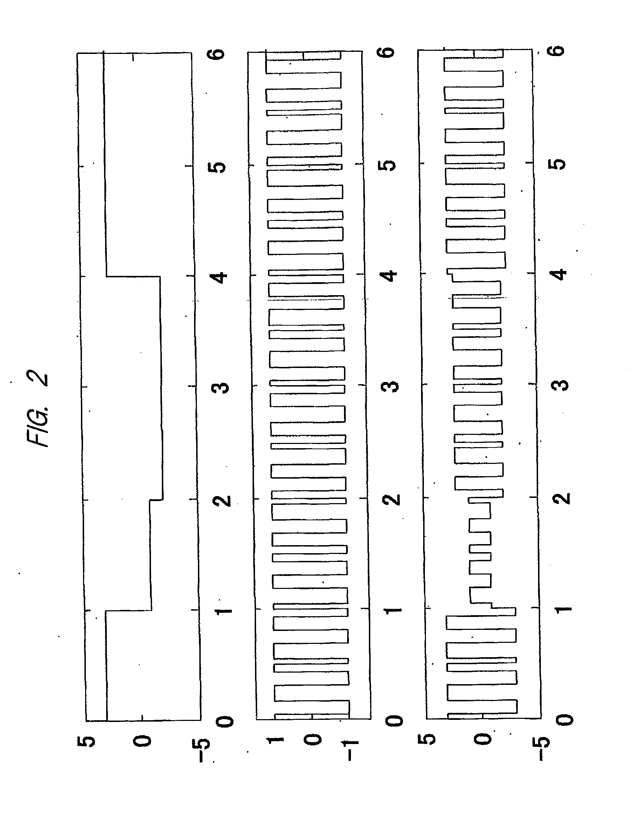

The sampling time T of a signal S is set to 1 second (for normalization). The state thereof is shown in the uppermost part of FIG. 2. Next, Hadamard orthogonal codes having a code length N of 16 are used as the orthogonal codes. The Hadamard orthogonal codes are used as examples in this case, but in the techniques disclosed in the present specification, the type of the codes is not limited as long as the codes are orthogonal between different codes. The code length of 16 is also shown only by way of example. However, the code length is desired to be equal to or more than the number of multiplexing axes because the signals of the respective axes can be separated by superimposing different codes on the respective axes.

Also, although the S/N ratio of the signals is more improved as the code length becomes longer, power consumption is also increased. Therefore, by configuring the code length to be variable, the balance between performance and power consumption can be achieved in accordance with the trade-off relation between mutual interference and a circuit driving clock.

Hereinafter, the sampling time of each code will be referred to as "chip". When division of one sample of a signal by N chips is considered, the sampling time of one chip is T/N, that is, 1/16 second or 62.5 milliseconds in this example. Next, the signal is divided by N, and the respective codes are superimposed. More specifically, a signal S whose sampling time T is 1 second is subjected to oversampling at every T/N time, and this is employed as an N-dimensional vector to be represented as (6).

[Expression 5]

$$\mathbf{S} = S[1 \ 1 \ \ldots \ 1 \ 1] = [S \ S \ \ldots \ S \ S] \quad \cdots (6)$$

Next, the signal vector extended to the N-dimensions and G1 which is one of the N-dimensional orthogonal codes are multiplied for each element. More specifically, this is expressed by (7).

[Expression 6]

$$\mathbf{S} \otimes \mathbf{G1} = [S \cdot gN{-}1 \ \ S \cdot gN{-}2 \ \ \ldots \ \ S \cdot g2 \ \ S \cdot g1] \quad \cdots (7)$$

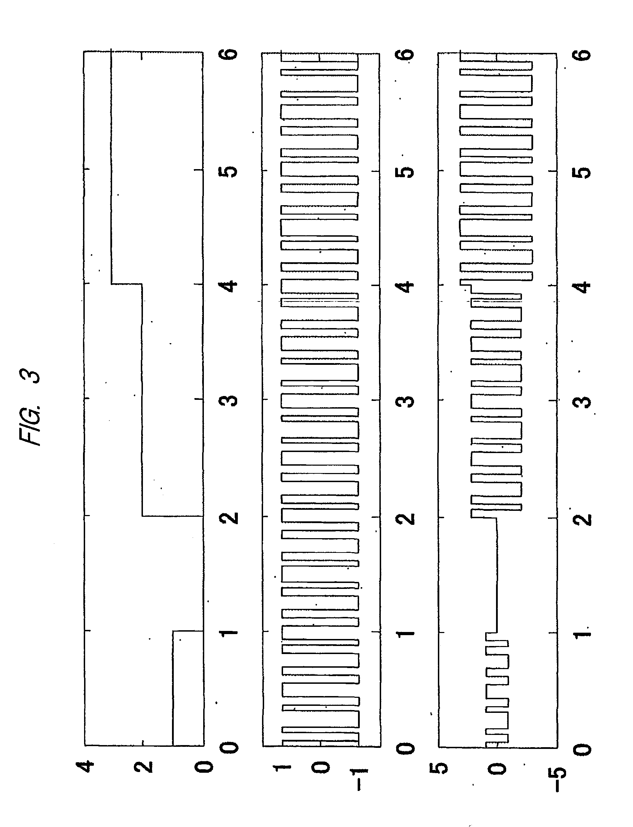

Herein, $\otimes$ indicates a multiplication for each element of the vector. An example of G1 is shown in an intermediate part of FIG. 2, and the result of multiplying G1 by the signal S is shown in a lower part of FIG. 2. Another signal W different from the signal S is shown in an upper part of FIG. 3, an orthogonal code G2 having N=16 different from G1z is shown in an intermediate part of FIG. 3, and the result of multiplying W by G2 is shown in a lower part of FIG. 3. Next, the following expression is shown in an upper part of FIG. 4.

[Expression 7]

$$\mathbf{Z}(\mathbf{S} \otimes \mathbf{G2} + \mathbf{W} \otimes \mathbf{G2})$$

Here, when the important property of the Hadamard orthogonal codes described above is used, (8) below can be obtained.

[Expression 8]

$$\mathbf{Z \cdot G1} = (\mathbf{S \otimes G1} + \mathbf{W \otimes G2}) \cdot \mathbf{G1} = N\mathbf{S} = 16\mathbf{S}$$

$$\mathbf{Z \cdot G2} = (\mathbf{S \otimes G1} + \mathbf{W \otimes G2}) \cdot \mathbf{G2} = N\mathbf{W} = 16\mathbf{W} \qquad \cdots (8)$$

$$\mathbf{Z \cdot Gn} = (\mathbf{S \otimes G1} + \mathbf{W \otimes G2}) \cdot \mathbf{Gn} = 0 \quad (n \neq 1, 2)$$

More specifically, with respect to the signals encoded by the same orthogonal code, signals having a gain multiplied by the code length N thereof are obtained, and with respect to the signals encoded by different orthogonal codes, they are completely cancelled out and 0 is obtained. The lower part of FIG. 4 is the result of obtaining the inner product of G1 again for each sampling time of Z, and it can be understood that only the result of multiplying the signal S by N appears and the influence of interference by the signal W does not appear.

In the case where some signals are encoded by using mutually different orthogonal codes in the above-described manner, even when they are once assembled by adding (superimposing), each of the signals can be taken out without interference by obtaining the inner products thereof again with the orthogonal codes used in the encoding thereof. When this is applied to the sensor, encoding the voltage applied to the detection elements 5 with the orthogonal codes which are different for the respective elements, in other words, switching the applied voltages by +V and -V (certain bias may be sometimes included as described later) and obtaining the inner products with the respective orthogonal codes by the matched filter 9 are equivalent to the above-described encoding and decoding by the orthogonal codes, and when such a circuit configuration is employed, the capacitance changes of the respective elements can be taken out from the signals on which the output voltages from the respective elements are superimposed.

In view of the foregoing, a physical-quantity sensor according to the present embodiment is characterized by including: a first detection element (5) having a first movable part which responds to a first physical quantity and a first electrode to which a voltage encoded by a first code is applied; a second detection element (5) having a second movable part which responds to a second physical quantity different from the first physical quantity and a second electrode to which a voltage encoded by a second code orthogonal to the first code is applied; a first converting unit (10) which converts a first analog signal on which an output voltage from the first detection element and an output voltage from the second detection element are superimposed to a first digital signal; a first decoding unit (9) which decodes the first digital signal by the first code; and a second decoding unit (9) which decodes the first digital signal by the second code.

By virtue of the characteristics, the converting unit 10 is shared by the plurality of detection elements 5, detection of the physical quantities in multiple axes can be realized by the single converting unit 10, and manufacturing cost can be reduced. Also, since the mutually orthogonal codes are used, third and subsequent axes can be supported, temporal continuity is ensured, and problems such as interference between frequencies are not caused. Therefore, it is possible to provide the physical-quantity sensor with higher precision.

Disturbance factors such as noise are causes which break orthogonality, and in general, even when completely orthogonal codes are superimposed on output signals of a plurality of detection elements, mutual interference is sometimes caused by noise. This indicates that it is preferred to employ the structure in which the number of above-described assembled signals is changed within the range of a noise level permitted by the system. When the case of combining acceleration sensors of three axes is considered, it is possible to convert signals from a total of three detection elements to digital signals by one converting unit in principle. However, when the noise on the signals from the signal detection elements is taken into consideration, interference signal power (electric power) per one axis in the case where all the three axes are assembled is twice as large as that in the case where they are divided into two axes and one axis. Therefore, it is preferred to superimpose the signals within the range of the noise level permitted by the system.

<Details of Sensor Configuration>

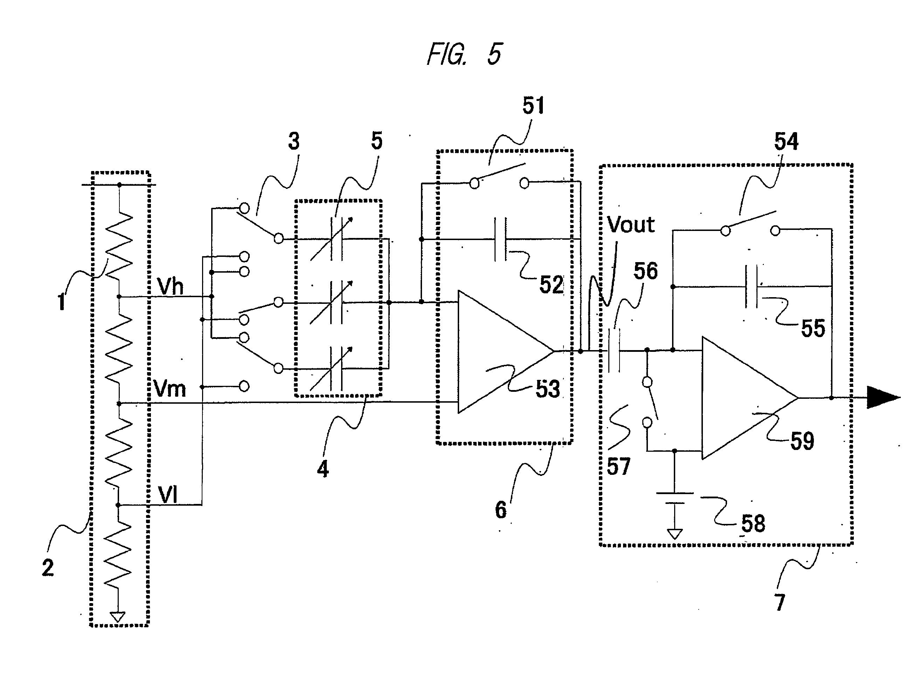

FIG. 5 shows details of the configuration from the voltage generating unit 2 to the amplifier unit 7 of FIG. 1. In FIG. 5, a reference numeral 51 denotes a switch of the C/V converting unit, 52 denotes a feedback capacitance of the C/V converting unit, 53 denotes an operational amplifier of the C/V converting unit, 54 denotes a feedback-unit switch of the amplifier unit, 55 denotes a feedback capacitance of the amplifier unit, 56 denotes an input capacitance of the amplifier unit, 57 denotes an input switch of the amplifier unit, 58 denotes a bias voltage of the amplifier unit, and 59 denotes an operational amplifier of the amplifier unit.

First, in the present embodiment, appropriate voltages such as three voltages Vh, Vm, and Vl (Vh>Vm>Vl) are generated by the voltage-dividing resistance 1 in the voltage generating unit 2, and Vh and Vl among them are applied to the capacitance change part 5 of the detection elements, and thereby detecting the capacitance changes thereof.

In order to detect the capacitance changes, the capacitance changes are converted to voltages in the C/V converting unit 6. Herein, detection principles thereof will be described by focusing on one of the detection elements 5. However, also in the case where the plurality of detection elements 5 are assembled to provide an input of the C/V converting unit 6 as shown in FIG. 5, detection principles can be similarly described. More specifically, in the following description, since an operation of converting a capacitance to a voltage is linear, the sum of individual voltage conversions of the capacitances of the respective detection elements 5 becomes the output of the C/V converting circuit 6. The circuit unit employs a two-phase discrete-time drive composed of p1 and p2, and the switch 3 is assumed to be switched to Vh in p1 and to Vl in p2. Similarly, the switch 51 is assumed to be turned on in p1 and is turned off in p2. Furthermore, Vm is assumed to be connected to a positive input of the operational amplifier unit 53. Thus, since a voltage (Vh-Vm) is applied to the detection element 5 in p1, there is a relation of $Q=CV$ where Q is a charge amount, C is the capacitance of a capacitor, and V is a voltage. Therefore, when the capacitance of the detection element 5 is defined as C1, the charge amount charged therein is C1 (Vh-Vm). Also, since the switch 51 is in an on state, the feedback capacitance 52 is in a discharging state. Then, when it is switched to p2, a charge amount of C1(Vl-Vm) is similarly charged to the detection element 5. At this point, since the switch 51 is brought into an off state, the capacitance to be charged to the feedback capacitance 52 is C1 (Vh-Vm) -C1 (Vl-Vm)=C1(Vh-Vl) if it is assumed that the current to the operational amplifier input does not flow. At this point, if the output voltage of the C/V converting unit 6 is Vout and the feedback capacitance 22 of the C/V converting unit is Cf, $Q=Cf$ (Vout-Vm) is obtained similarly from the relation of $Q=CV$, and Vout=(Vh-Vl)Cl/Cf+Vm is obtained from the relation of Cf(Vout-Vm)=Cl(Vh-Vl). Therefore, the capacitance of C1 can be obtained as a voltage through the gain of (Vh-Vl)/Cf. The capacitance changes of the detection element 5 can be obtained by discretely repeating the above-described states of p1 and p2.

Furthermore, if the phase of the switch 3 is changed so that the switch 3 is switched to Vl in p1 and to Vh in p2, Vout=(Vl-Vh)C1/Cf+Vm is obtained through similar calculations. If the difference between Vh and Vl is defined as (Vh-Vl)=Vc, Vout=Vc·C1/Cf+Vm is obtained in the former example, Vout=-Vc·C1/Cf+Vm is obtained in this example, and it can be understood that the sign is inverted about the bias amount Vm. This indicates that application of orthogonal codes composed only of 1 and -1 to the detection element 5 can be realized only by changing the phase of the switch 3. More specifically, when an element of the orthogonal code is 1, a mode in which the switch is switched to Vh in p1 and to Vl in p2 should be employed, and when an element of the orthogonal code is -1, a mode in which the switch is switched to Vl in p1 and to Vh in p2 should be employed. Changing the phases of the two-phase switch can be digitally implemented, and chip-area increase cost in the formation of an IC is also small.

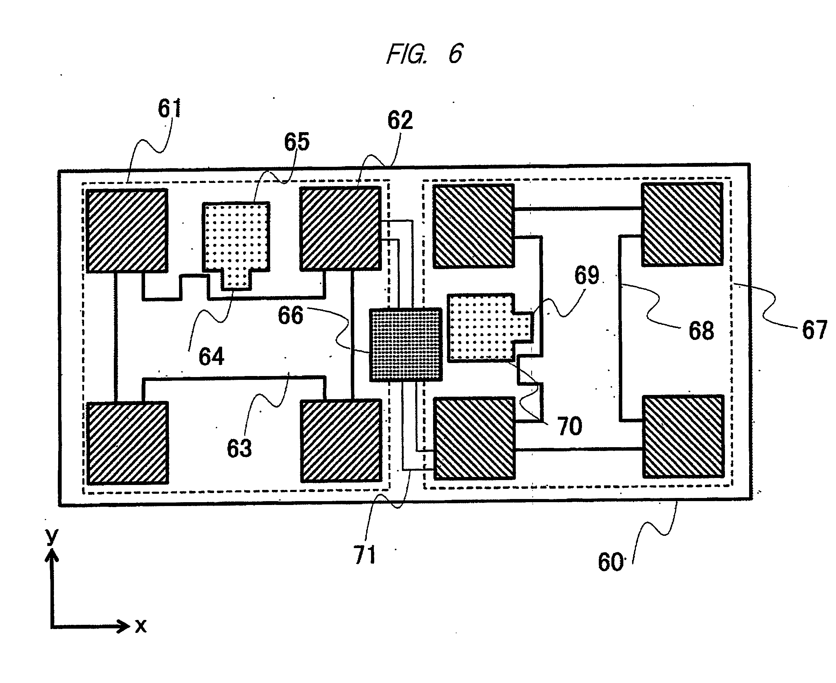

Furthermore, by configuring the switch units 3 connected to the respective detection elements 5 so as to be able to independently switch the modes of the phases, mutually orthogonal codes can be applied to the respective detection elements 5. In the present specification, the expression of "a code is applied" is used as a meaning of "a voltage on which a voltage corresponding to a code is superimposed is applied to the detection element". A specific example thereof will be described later with reference to FIG. 6. This implementation is also digitally possible. From a viewpoint of interference prevention and a viewpoint of matched filter processing described later, the phase changing timing of the switches 3 is desired to be synchronized among all the switches.

<About Detection Unit>

FIG. 6 is a drawing showing details of the configuration of the detection unit 4 (assumed to be a single chip 60). In this case, in a capacitance detecting element 61 of a first axis direction (X direction) having a comb finger, the movable part 63 supported by fixed parts 62 is displaced by physical-quantity application, and the distance therefrom to the comb finger 64 of the fixed part is changed. At this point, if a voltage has been applied to a carrier-applying electrode 65 in advance, the change of the capacitance, that is, the magnitude of the physical quantity can be detected as a voltage by connecting the output from a detection-signal electrode 66 to the C/V converting unit 6.

Here, as described above, when carrier voltages are encoded by mutually different orthogonal codes (voltages corresponding to the codes are superimposed on respective carrier voltages) among the detection elements which detect different physical quantities, and are applied to the carrier-applying electrode, even though a plurality of detection signals are assembled to share the C/V converting unit 6, each of the signals can be taken out later without interference by decoding them by using the respective orthogonal codes. Therefore, even when a detection element of a principle that a movable part 68 of a second axis direction is displaced by physical-quantity application to a capacitance detecting element 67 of the second axis direction (Y direction) and the distance between comb fingers from a fixed part 69 of the second axis direction is changed is provided on the same chip 61, and the detection-signal electrode 66 is shared with the capacitance detecting element 61 of the first axis direction, as long as carrier voltages encoded by codes different from the orthogonal codes applied to the carrier-applying electrode 65 are applied to a carrier-applying electrode 70, the detection-signal electrode 66 can be shared with that of the first axis. If the electrode is shared, a wiring pattern 71 may be interposed, or the fixed parts or movable parts may be shared in the first axis and the second axis. In this case, the term "axis" is used, and as an example of different physical-quantity sensors, the configuration having two acceleration sensors of different axes has been described. However, the sensor may be configured to have detection elements which detect different physical quantities (for example, acceleration and angular velocity).

FIG. 6 shows a mounting form in which the detection unit 4 is particularly mounted in a chip different from that of the voltage generating unit 2 and the C/V converting unit 6. In this case, the carrier-applying electrodes 65 and 70 are mounted as pads which establish electrical connection with the voltage generating unit 2, and the detection-signal electrode 66 is mounted as a pad which establishes electrical connection with the C/V converting unit 6.

However, the configuration of the detection unit 4 is not limited to this, and for example, the detection unit 4 may be mounted on the same chip as that of the voltage generating unit 2. In that case, all the elements contained in the chip 60 are mounted in the same chip as that of the voltage generating unit 2, and the carrier-applying electrodes 65 and 70 serve also as output electrodes of the switches 3. Similarly, the detection-signal electrode 66 serves also as an input electrode to the C/V converting unit 6.

As described above, the configuration of FIG. 5 and FIG. 6 is characterized by including the detection-signal electrode 66, which is connected to the detection element 61 and the detection element 67, and the C/V converting unit 6, which has an input to which the detection-signal electrode is connected and converts the analog signals on which the output voltages from the detection element 61 and the output voltages from the detection element 67 are superimposed to digital signals. In other words, in a previous stage of the C/V converting unit 6, the detection-signal electrode, which assembles the electrodes of the respective detection elements 5, is provided.

According to this configuration, application of a common reference potential to the movable parts 63 and 68 becomes easy, and variations in phase lag can be reduced by standardizing the parasitic components among the detection elements. Furthermore, in the case where the detection unit 4 and the C/V converting unit 6 are formed in different chips, effects of reducing the number of electrodes and reducing the operation cost of wire bonding can be achieved.

Moreover, in the present configuration, orthogonal codes are used as examples, and when they are normally operating in synchronization with each other, simultaneous detection of multiple axes can be carried out because of the low interference thereof. This means that, if the detection element 5 of a certain axis is fixed (becomes immobile for some reason) or if a trouble such as disconnection of a bonding wire for applying an input voltage to the detection element 5 occurs, the trouble appears in another axis.

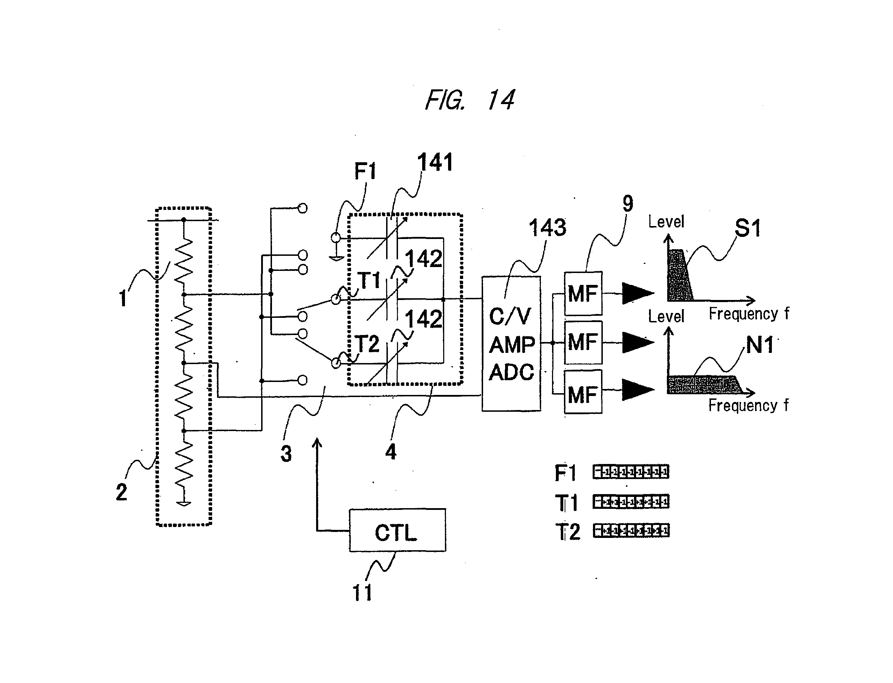

FIG. 14 shows a state in which such a trouble has occurred. In FIG. 14, a reference numeral 141 denotes a detection element in which a trouble has occurred, 142 denotes normally operating detection elements, and F1, T1, and T2 denote codes respectively applied thereto. Since details of the circuit units including the C/V converting unit 6, the amplifier unit 7, and the ADC unit 8 are irrelevant to the point of this case, they are collectively shown as a circuit unit 143. For example, in the case where a bonding wire of a voltage application unit of the first axis contacts an electrode of a GND level, the applied signal F1 to the capacitance change part of the detection element 141 of the second axis is no longer an orthogonal code as shown in FIG. 14. Therefore, an interference with the other detection axis is increased. As a result, even if the signals applied to the capacitance change part of the detection element 142 of the other axis is the signal T1 or T2 which has been modulated by a legitimate orthogonal code, the signals of the respective axes obtained through the circuit unit 143 including the C/V converting unit to ADC and the matched filter 9 output larger noise than that of a normal state. For example, the signals S1 which have been concentrated only on a lower area in a steady state appear as signals N1 whose frequency components appear also in a wide area and give interference when the above-described event has occurred. Therefore, by providing a monitoring unit which monitors noise levels or frequency components of all the axes so that it notifies malfunctions when the detected noise or frequency component exceeds a predetermined threshold value, the failure of the sensor can be detected also from the axis in which failure has not occurred. This leads to enhancement of reliability in a sensor in which failure detection is indispensable like the sensors for automobiles.

<About Amplifier Unit>

Next, the amplifier unit 7 will be described. It can be understood that, when the above-described output-voltage calculating method utilizing charge transfer is used, the change of Vout in the amplifier unit obtains a gain of (Cia/Cfa) by discrete operations of the circuit if the feedback capacitance 25 of the amplifier unit is expressed as Cfa and the input capacitance 26 of the amplifier unit is expressed as Cia.

Note that the amplifier unit shown here is not always necessary to be provided. If sufficient signal ranges can be obtained by the C/V converting unit, it is not necessary to provide it. Alternatively, a multiple level configuration may be employed conversely to obtain larger gains. This is for the reason that, since the pass band of the amplifier unit and signal gains are generally in a trade-off relation, the pass band is narrowed when large gains are obtained, and a desired band cannot be obtained in some cases. Therefore, the configuration that employs the multiple level configuration to obtain large gains while keeping a wide band is effective. Furthermore, the amplifier of this multiple level configuration needs to share all of operating clocks as described above.

<About ADC Unit>

In the ADC unit 8, the voltage signals which have gone through the amplifier unit 7 in a previous stage are converted to digital signals. In the embodiment shown here, any configuration method such as a ΔΣ type, a SAR (sequential comparison) type, a pipeline type, or a flash type can be employed as the configuration of the ADC unit in this case, and the configuration is not limited. However, in this case, it is desired to design the ADC unit so that an input range larger than the sum of the ranges of multiplexed signals is provided and saturation does not occur. Moreover, in the ADC unit 8, it is preferred to convert the analog voltages to digital signals by carrying out the sampling with the same clock as the clock of the discrete operation or with a multiplied or divided clock thereof. This is for the reason that, since one phase of the two phases of the output of the amplifier unit is a phase for charging, even when sampling of the voltages is carried out in this phase, the state of the detection element 5 cannot be obtained as an output voltage. Also, the above-described clock configuration is preferred also in terms of circuit configuration because interference noise due to the fact that mutual operating clocks are different is not generated.

<About Decoding Unit>

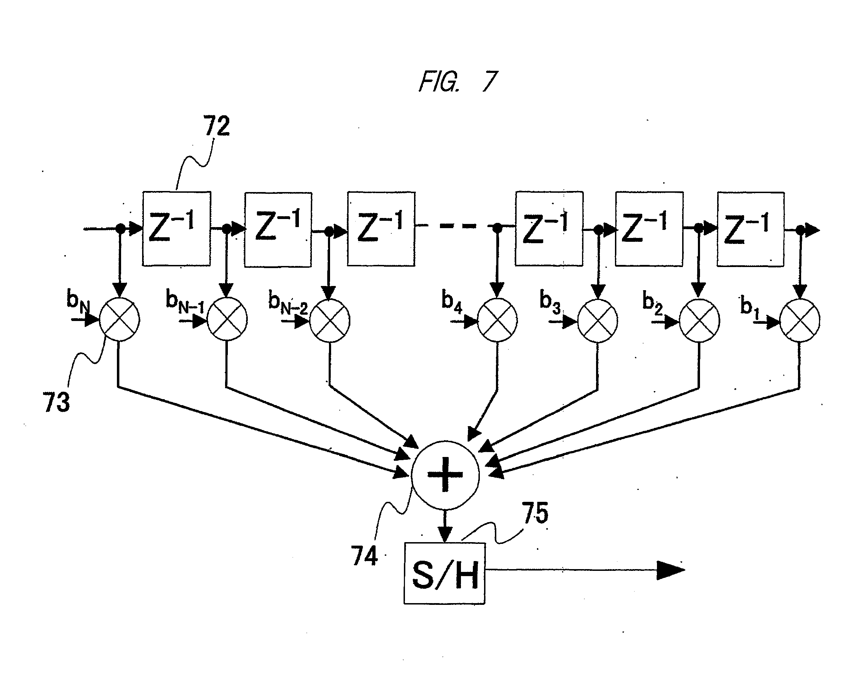

The digital signals which have gone through the ADC unit 8 are input to the decoding units 9 respectively corresponding to the detection elements 5. Hereinafter, an example in which a matched filter is used as the decoding unit 9 will be described. FIG. 7 shows a configuration example of the matched filter. Here, a reference numeral 72 denotes 1-chip delay devices, 73 denotes multipliers, 74 denotes an adder, and 75 denotes a sample holder. The sampling interval of the sample holder is not one chip but a sampling interval T second of the signal N-times the code length thereof, and the phase of the sampling interval can be adjusted in units of one chip or less. In the matched filter, a process of adding the results of multiplying the signal levels each of which has been delayed by one chip by the codes represented by bN to b1 is carried out. This is equivalent to a process of obtaining the inner product of two N-dimensional vectors.
Since bN to b1 are 1 or -1 in this process, multiplication can be realized only by inverting the signs thereof in practice. Therefore, the superimposition of the orthogonal codes and decoding thereof essentially have a comparatively small computation processing amount in the point that multiplication carried out by multiplying a value other than 1 or -1 is not used, and therefore, decoding processes of the codes can be realized at low cost.
More specifically, since the components of the voltages applied to the detection elements 5 are composed of 1 or -1, the decoding process of the codes can be realized at low cost.
In the above-described matched filter unit, the chip timing of the codes has to be synchronized. However, since there are parasitic components around the detection elements 5 and delays in the C/V converting unit 6, the amplifier unit 7, and the ADC unit 8, if the matched filter is driven at the completely same time as the clock of the switch unit 3, decoding of the orthogonal codes may be disabled due to the mismatched chip timing. In such a case, the signals can be synchronized by inserting a variable delay device (not shown) to an input stage of the matched filter unit so as to delay the signals by a predetermined chip amount. If mutually different delays are contained in the respective signals, the signals may be individually adjusted by providing independent delay devices at the respective axes. Alternatively, an automatic adjustment function that shifts the timing of sample and hold sequentially by one chip and synchronizes the timing with the timing at which the largest signal level is obtained may be provided by utilizing the autocorrelation properties of the orthogonal codes. When the automatic adjustment function is provided, since adjustment before shipment is not required even when delay time is varied among individual pieces, this is extremely effective from the viewpoint of adjustment cost reduction.
The orthogonal codes are decoded by such a matched filter, and the signals output at the signal sampling interval T are output to outside through arbitrary post-processing circuits (not shown) such as a low-pass filter and a gain/bias adjusting circuit. In the case where the object is not an acceleration sensor but is an angular velocity sensor, the signals are output further through synchronization detection at the drive frequency and a feedback control circuit depending on the case.

<Continuous Time Drive>

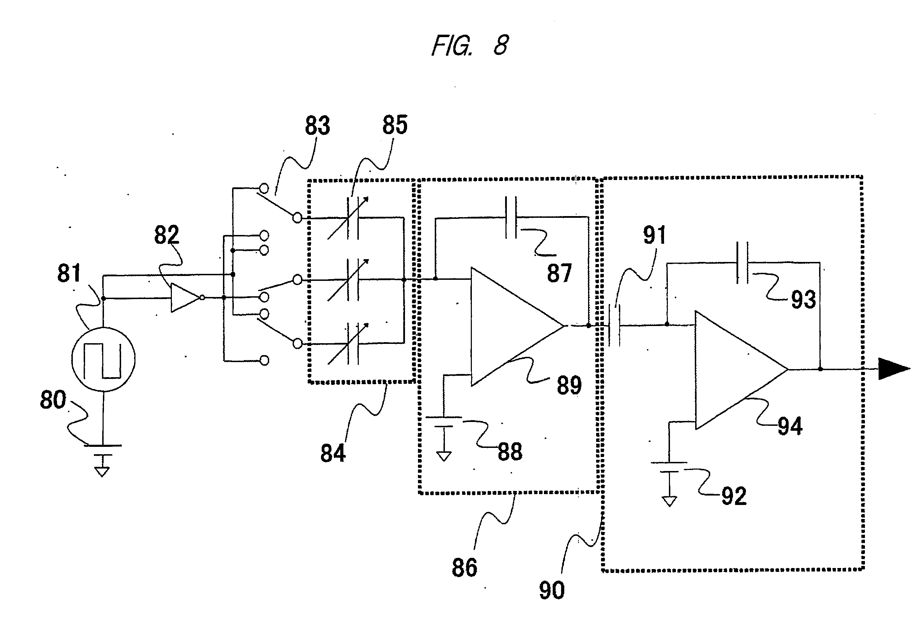

FIG. 8 shows an example different from FIG. 1 in the configuration from the voltage generating unit to the amplifier unit. Compared with FIG. 1, the configuration of FIG. 8 is different in a point that the circuit employs continuous time drive instead of discrete time drive using a switched capacitor. A reference numeral 80 denotes a bias-voltage applying unit of input carriers, 81 denotes an AC voltage applying unit of the input carriers, 82 denotes a polarity reversing unit of the input carriers, 83 denotes a switch unit, 84 denotes a detection unit, 85 denotes detection element units, 86 denotes a C/V converting unit, 87 denotes a feedback capacitance of the C/V converting unit, 88 denotes a bias-input-voltage generating unit of the C/V converting unit, 89 denotes an operational amplifier of the C/V converting unit, 90 denotes an amplifier unit, 91 denotes an input capacitance of the amplifier unit, 92 denotes a bias-input-voltage generating unit of the amplifier unit, 93 denotes a feedback capacitance of the amplifier unit, and 94 denotes an operational amplifier of the amplifier unit. A control unit of the switch unit 83 is omitted since it is similar to the control unit 11 of FIG. 1.

In FIG. 8, in the AC voltage applying unit 81 of the input carriers and the bias-voltage applying unit 80 of the input carriers, the voltage Vh+Vm generated in the same manner as the first embodiment and the voltage (Vl+Vm) obtained by inverting polarity thereof are switched by the switch unit 83 in accordance with orthogonal codes and applied to the capacitance change part 84 of the detection elements, and thereby detecting capacitance changes thereof. In this process, the applied voltages are not always required to have AC components.

Also in the following amplifier unit 90, amplification of signals is processed by continuous time. The input capacitance 91 and the feedback capacitance 92 used in the amplifier unit 90 may be respectively replaced by resistances. A noise reducing effect may be obtained by combining a resistance and a capacitance and carrying out band limitation at the same time.

The signals which have gone through the amplifier unit 90 are applied to the ADC unit 8. Apparently, the clock for applying the orthogonal codes and the sampling clock of the ADC unit 8 are preferred to be synchronized with each other. Also, when AC signals are applied to the capacitance change part 84 of the detection elements, these signals are preferred to be the signals synchronized with the sampling clock of the ADC unit 8.

Implementing the applied voltages for capacitance change detection of the capacitance change parts 85 of the detection elements by the circuit of the continuous time system in the above-described manner is effective in the case where an IC is fabricated by using the processes in which variations of circuit element constants do not pose any problem and the case where the circuit is formed by discrete parts. To the contrary, the discrete-time circuit shown in FIG. 1 which can be formed only with the capacitances is effective in the case where an IC is fabricated by using the processes in which capacitance ratios are not varied even when capacitances are varied, and an advantageous one can be selected depending on implementation conditions.

<Generation Method of Orthogonal Codes by MEMS Filter>

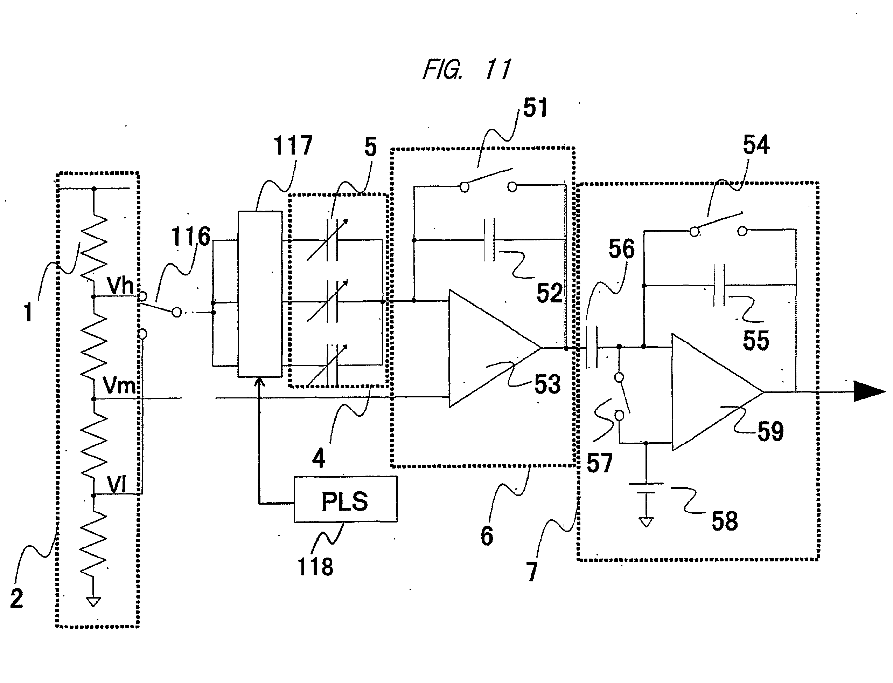

FIG. 11 shows a sensor configuration different from that of FIG. 1. Compared with FIG. 1, the configuration of FIG. 11 is different in a point that a MEMS filter is used for polarity reversal of the applied voltages. In FIG. 11, a reference numeral 116 denotes a voltage switch for subjecting the applied voltages to discrete operations, 117 denotes a MEMS filter, and 118 denotes a pulse applying unit.

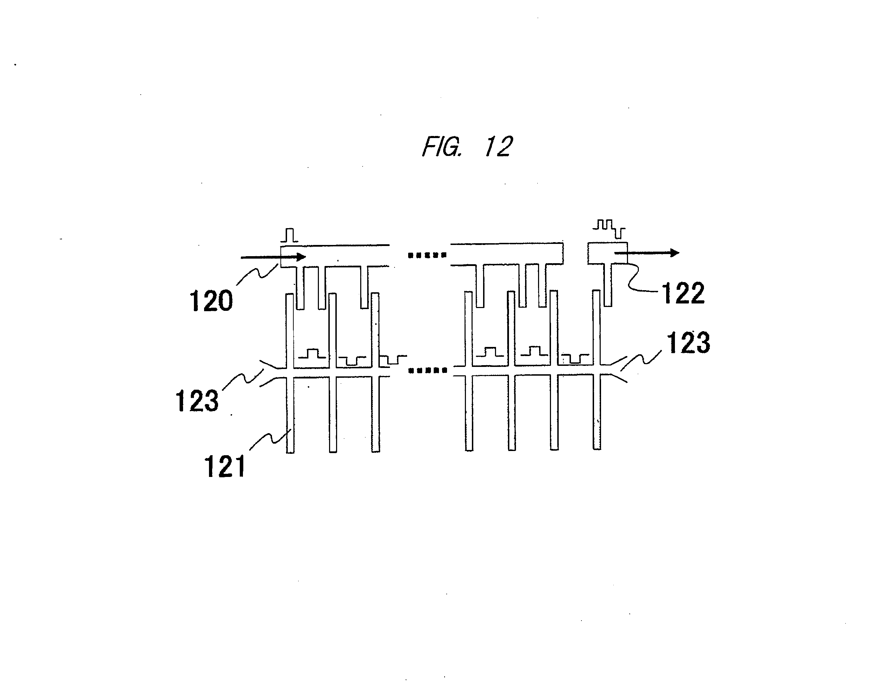

FIG. 12 shows a configuration of the MEMS filter. Here, a reference numeral 120 denotes an input electrode, 121 denotes a comb-finger-shaped filter electrode, 122 denotes an output electrode, and 123 denotes a beam part of the comb-finger-shaped filter. This MEMS filter can be formed on an SOI substrate, and can be realized by, for example, forming a configuration in which the input electrode 120 and the output electrode 122 are formed on an insulating layer and a suspension configuration in which the filter electrode 121 is retained by the beam 123 without interposing the insulating layer. It is assumed that the filter electrode 120 is provided with an electrode and a certain potential referred to as a common potential is applied thereto. When the pulse applying unit 118 inputs a pulse of a voltage employing the common potential as a reference to the input electrode 120, the comb fingers of the substrate 123 are strained by electrostatic force, and elastic waves are generated. The elastic waves generated at the comb fingers sequentially travel in the comb-finger filter 121 and propagates the strain to the comb finger opposed to the output electrode 122. The strain generated at the comb finger opposed to the output electrode 122 works as electrostatic force to generate a voltage at the output electrode 122. Since this sequentially occurs by the number of the comb fingers of the comb-finger filter, one pulse becomes the pulses corresponding to the number of the comb fingers and appears as voltages at the output electrode 122. Since the pulse frequency at this point is determined by the comb-finger interval of the comb-finger filter and the traveling velocity of the elastic waves, it is desired to set a comb-finger interval corresponding to a desired pulse frequency.

When the front/rear positional relation of the comb fingers provided in the input electrode 120 and the comb fingers of the comb-finger filter 121 is formed so as to correspond to +1 and -1 of orthogonal codes in the above-described manner as shown in FIG. 12, the generation direction of the strain is reversed, with the result that the positive/negative of the voltage pulse train to be output is determined. Therefore, one input pulse becomes a pulse train having a code length N on which the orthogonal code is superimposed and is obtained from the output electrode 122.

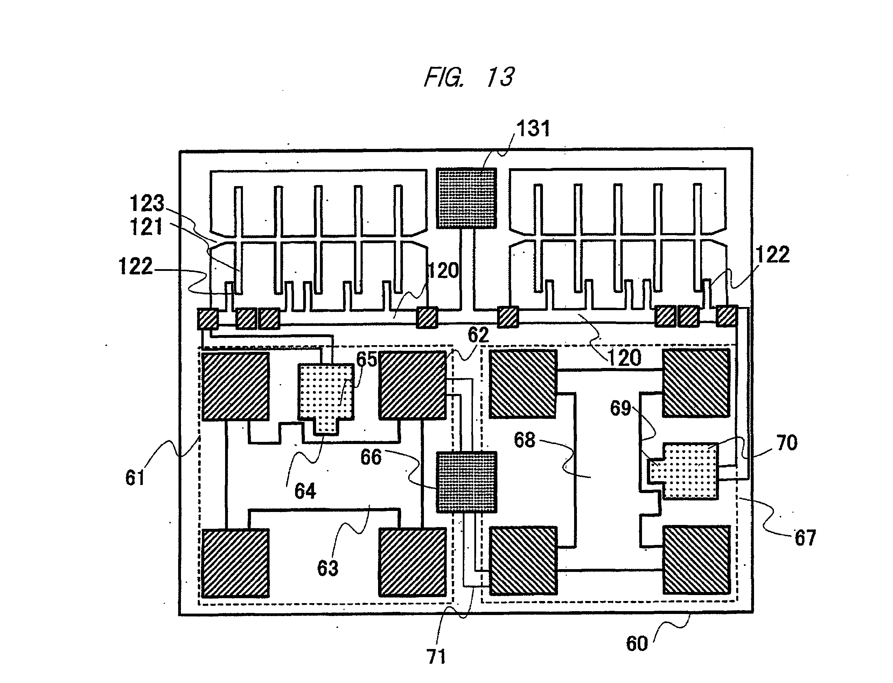

This filter can be formed by using, for example, the same SOI substrate and DRIE (Deep Reactive Ion Etching) process as those of a MEMS acceleration sensor and angular-velocity sensor, and the manufacturing cost can be suppressed by integration into one chip. FIG. 13 shows a configuration example thereof. In the configuration example shown in FIG. 13, a MEMS sensor and a MEMS filter are provided on the chip 60. In this case, since signals on which a plurality of orthogonal codes are superimposed are obtained in the MEMS filters having different structures only by commonly inputting a single pulse to a common electrode 131, electrodes for wire bonding and wire-bonding operations are reduced, and further cost reduction is realized.

Second Embodiment

In the first embodiment, all of the capacitance signals from the respective detection elements 5 in the detection unit 4 are converted to voltage signals in the same C/V converting unit 6 and are converted to digital signals in the same converting unit 10. On the other hand, in the present embodiment, an example in which the circuits in the subsequent stage of the detection elements 5 are variable so as to correspond to the detection elements 5 will be described.

In a sensor having multiple detection axes, detection ranges are sometimes different for each of the detection elements. For example, when acceleration in the directions of X, Y, and Z is considered, since detection in the X- and Y-axis directions can be realized by rotating the detection element on the semiconductor wafer by 90°, this can be implemented by basically the same structure. On the other hand, since detection in the Z-axis direction is in the direction vertical to the wafer, the detection principle has to be essentially changed. Therefore, the case in which the detection ranges are different by ten times or more sometimes occurs like the case in which the detection ranges of the X-axis and the Y-axis are $\pm100$fF and the detection range of the Z-axis is +10fF. Also, in a combined sensor for acceleration and angular velocity, due to the difference in structure between an acceleration sensor which detects DC-like movement and an angular-velocity sensor which detects AC-like movement, the case in which the detection ranges are different sometimes occurs like the case in which the detection range of the acceleration sensor is $\pm50$fF and the detection range of the angular-velocity sensor is $\pm5$fF.

In such cases, if all the axes are converted to voltages by the same C/V converting unit, gains have to be obtained in accordance with a signal having the smallest range. Therefore, the dynamic range of the signal having a large range is lost, and deterioration is caused in terms of performance such as resolution or the like. When the capacitance of the detection element 5 is C, the feedback capacitance is Cf, and the applied voltage is Vin, since the output voltage Vout of the C/V converting unit has the relation of Vout=Vin(C/Cf), the ranges can be equalized by applying an A-fold voltage to the capacitance of the detection element unit 5 that is smaller by A times. However, the deterioration amount of the dynamic ranges is the same as a result, and this does not give a fundamental solution. The configuration of the present embodiment solves this problem.

<Configuration to Assemble Sensors having Small Difference in Detection Range>

The simplest method to solve the above-described problem is to form the configuration in which the detection elements 5 having a small difference in detection range share the circuit in the subsequent stage thereof and the detection elements 5 having a large difference in detection range are provided with respectively independent circuits in the subsequent stage thereof.

Specifically, analog signals on which output voltages from the plurality of detection elements 5 of a first group are superimposed are converted to digital signals by a first converting unit 10, and analog signals on which output voltages from the plurality of detection elements 5 of a second group are superimposed are converted to digital signals by a second converting unit 10. Here, sensors are combined so that the difference in the detection range between the sensors included in the first group is small, the difference in the detection range between the sensors included in the second group is similarly small, and the difference in the detection range is large when the sensors of the first group and the second group are compared with each other. For example, these conditions are satisfied in an example in which the first group includes acceleration (angular-velocity) sensors of X- and Y-directions (directions parallel to the principal surface of a semiconductor substrate) and the second group includes an acceleration (angular-velocity) sensor of a Z-direction (direction perpendicular to the principal surface of the semiconductor substrate) and an example in which the first group includes acceleration sensors and the second group includes angular-velocity sensors. When such a configuration is employed, it is desirable to use the same clock among the sensors from the viewpoint of preventing signal interference.

<Configuration of Providing a Plurality of C/V Converting Units Suitable for Respective Sensors>

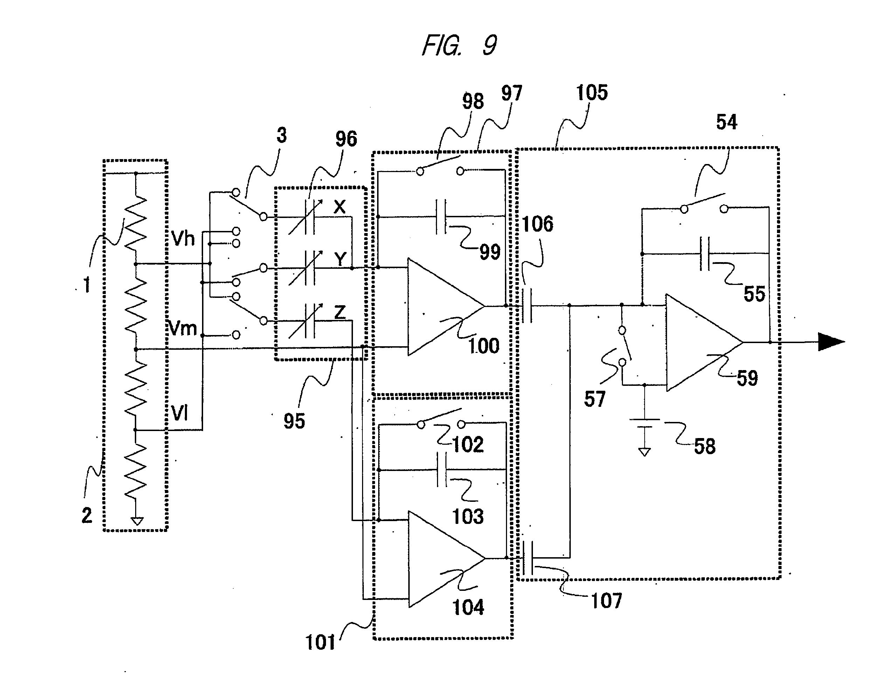

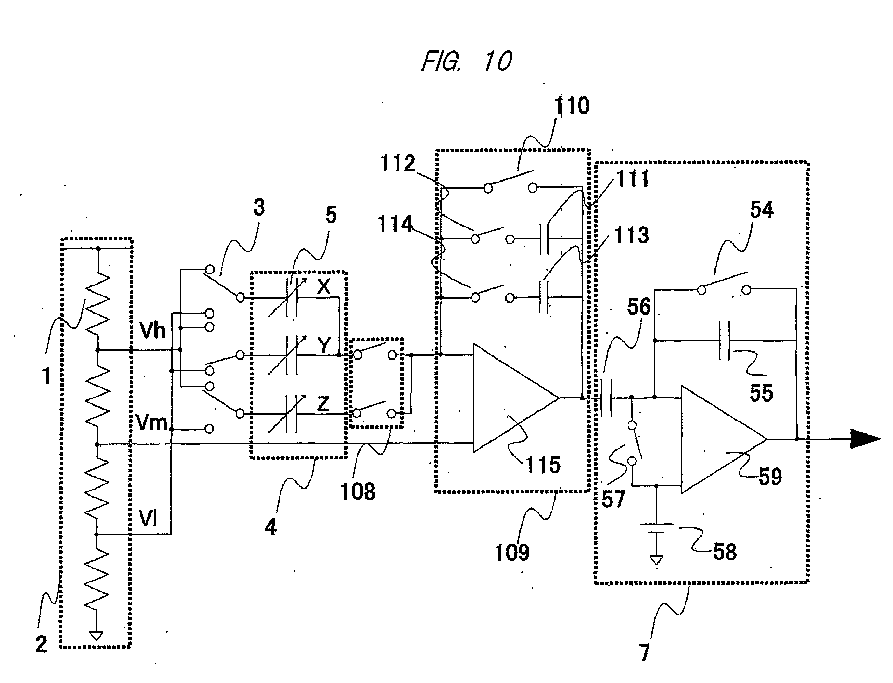

Hereinafter, an example having acceleration sensors of the X-, Y- and Z-directions will be described with reference to FIG. 9 and FIG. 10. In this case, the acceleration sensors of the X-direction and the Y-direction are taken as examples of the sensors having a small difference in the detection range, and an acceleration sensor of the Z-axis direction is taken as an example of the sensor having a large difference in the detection range from these sensors. However, the sensors are not limited to this combination. For example, also in a case in which an angular-velocity sensor of any of the axis directions is mounted in combination instead of the acceleration sensor of the Z-axis direction, the same discussion is possible.

FIG. 9 shows an example different from FIG. 5 in the configuration from the voltage generating unit to the amplifier unit. Compared with FIG. 5, this example is different in a point that the number of C/V converting circuits connected from the detection element change units 5 is not one, but plural. A reference numeral 95 denotes a detection unit, 96 denotes detection elements, 97 denotes a first C/V converting unit, 98 denotes a feedback switch of the first C/V converting unit, 99 denotes a feedback capacitance of the first C/V converting unit, 100 denotes an operational amplifier of the first C/V converting unit, 101 denotes a second C/V converting unit, 102 denotes a feedback switch of the second C/V converting unit, 103 denotes a feedback capacitance of the second C/V converting unit, 104 denotes an operational amplifier of the second C/V converting unit, 105 denotes an amplifier unit, 106 denotes an input capacitance from the first C/V converting unit, and 107 denotes an input capacitance from the second C/V converting unit.

In FIG. 9, the C/V converting units or the subsequent amplifier units are arranged to form a parallel configuration until the ranges of the signals are equalized, and the signals are added in the subsequent circuits, so that the benefit of reducing detection circuits by code division can be obtained without the loss of the dynamic ranges. Therefore, in the present embodiment, as shown in FIG. 9, the signals of the detection-element change units 96 of the X- and Y-axes are input to the first C/V converting unit 97 of small gains, and C/V conversion is carried out by the feedback capacitance 99 which gives small gains. On the other hand, the signals of the detection-element change unit 96 of the Z-axis are input to the second C/V converting unit 101 of large gains and obtain gains from the feedback capacitance 103 which give large gains, and the C/V conversion thereof is carried out.

As described above, the physical-quantity sensor shown in FIG. 9 is characterized by further including, for the first detection element (X of 96) which detects a first physical quantity (acceleration in X-direction) and receives application of the voltage encoded by the first code and the second detection element (Z of 96) which detects a second physical quantity (acceleration in Z-direction) and receives application of the voltage encoded by the second code orthogonal to the first code, a first C/V converting unit (97) which has an input connected to the first detection element and outputs the output voltage from the first detection element; and a second C/V converting unit (101) which has an input connected to the second detection element and outputs the output voltage from the second detection element. This is for the purpose of obtaining gains respectively suitable for the X-direction acceleration sensor and the Z-direction acceleration sensor by the independent first and second C/V converting units and simultaneously sharing the converting unit 10 by both of the sensors, and thereby reducing cost.

In the present embodiment, only the C/V converting units have the parallel configuration, but parallel configuration may be extended to the amplifier units. Also in that case, at least the ADC unit 8 can be shared by both of the sensors, and cost can be correspondingly reduced.

<Configuration in which Gains of Predetermined C/V Converting Unit are Variable>

FIG. 10 shows a configuration different from those of FIG. 5 and FIG. 9 in the configuration from the voltage generating unit to the amplifier unit. Compared with FIG. 5 and FIG. 9, this configuration is different in the point that the detection elements 5 to be input to the C/V converting unit can be selected by switches in the circuit connected from the detection elements 5 to the C/V converting circuit and the feedback capacitance of the C/V converting unit is also variable. A reference numeral 108 denotes a C/V-converting-unit input selecting switch, 109 denotes the C/V converting unit, 110 denotes a feedback-unit switch of the C/V converting unit, 111 denotes a first feedback capacitance of the C/V converting unit, 112 denotes a first feedback capacitance selecting switch of the C/V converting unit, 113 denotes a second feedback capacitance of the C/V converting unit, 114 denotes a second feedback capacitance selecting switch of the C/V converting unit, and 115 denotes an operational amplifier of the C/V converting unit.

In the present embodiment, if the range of the detection-element change unit 5 of the Z-axis is small with respect to the ranges of the detection elements 5 of the X- and Y-axes, detection of the X- and Y-axes and detection of the Z-axis are subjected to time division. More specifically, in the phase p1, the C/V-converting-unit input selecting switch 108 is switched to the side of the detection-element change unit of the X- and Y-axes, and the first feedback capacitance selecting switch 112 among the feedback capacitance selecting switches is closed, and thereby realizing the simultaneous measurement of the X- and Y-axes, while obtaining appropriate C/V conversion gains for the X- and Y-axes. In the other phase p2, the C/V-converting-unit input selecting switch 108 is switched to the side of the detection-element change unit of the Z-axis, and the second feedback capacitance selecting switch 114 among the feedback capacitance selecting switches is closed, and thereby obtaining an appropriate C/V conversion gain for the Z-axis. If there is a phase in which only a single signal is used like this embodiment, the orthogonal code is not always required to be superimposed in that phase. However, if two or more signals are used in each phase, superimposition of the orthogonal codes and decoding thereof are essential.

As described above, by sequentially changing these phases, simultaneous acquisition of the X- and Y-axes and multiple-axis measurement in a single detection circuit while maximally maintaining the dynamic ranges of the X-, Y-, and Z-axes become possible.

In the ADC unit 8 and thereafter, the results of sampling on the X- and Y-axis sides and sampling on the Z-axis side may be subjected to sample and hold to be parallelly processed before the matched filter, or may be serially processed by sharing the circuit.

Third Embodiment

In the third embodiment, a configuration using codes different from those of the first embodiment will be described. The orthogonal codes are poor in autocorrelation, and it is sometimes difficult to carry out chip synchronization in the case in which signals of multiple axes are added in a configuration in which synchronization is automated. In such a case, instead of the orthogonal codes, spread codes having randomness can be used. In the present application, the term "spread code having randomness" means a code that satisfies (1) an autocorrelation function Rii(I) has a large value at a phase difference l=0 mod N (here, mod is a residue calculation and N is a code length) and has a sufficiently small value at a phase difference other than that and (2) an interference function Rij (I) for an arbitrary code i and a code j is sufficiently small at all phase differences.

As an example of the code having such autocorrelation, a PN sequence will be used for the description below. The PN sequence is used as a meaning of a code that satisfies the following three properties. (1) Equilibrium: the appearance frequencies of 1 and -1 are different by at most 1. (2) Succession: with respect to the succession of 1 and the succession of -1, those having a successive number m is present at a rate of 1/2^m. (3) Correlativity: as a result of comparison of cycled codes, the difference in the number of matched terms and mismatched terms is at most 1. In the PN sequence, a code having the largest cycle referred to as a M sequence is described as follows in the case of the code in which the autocorrelation delays h(i) by i chip.

[Expression 9]

$$\left.\begin{array}{l} \sum_{i=1}^{N} h(0) \cdot h(0) = N \\[2mm] \sum_{i=1}^{N} h(0) \cdot h(x) = -1 \quad (x \neq 0) \end{array}\right\} \cdots (9)$$

In the PN codes, although the independency between codes is not complete, in a circuit configuration in which synchronization which may cause the above-described problem is automated, synchronization acquisition can be easily carried out when the PN sequence is used. Alternatively, a method in which a code having autocorrelation suitable for synchronization acquisition such as the PN sequence is used until the synchronization acquisition and the code is switched to a code having a low interference such as the Hadamard orthogonal code after synchronization is also effective.

Furthermore, when a code having high randomness such as the PN sequence is used, the band of the signals are expanded (spread) by superimposing the code on the responding signals of the detection-element change unit 5 and thereafter. Next, they are converted to digital signals in a band-expanded state, decoding is carried out by the same code again, and the band is returned to a narrow band (reverse spread). Consequently, in the case where external electromagnetic noise, in particular, noise having a certain frequency which is not flat is superimposed in the analog signal unit, interference to a desired band can be reduced by expanding (spreading) the band of the noise by a decoding operation. Therefore, the configuration in which responding signals of the detection elements 5 are obtained by using codes with high randomness such as the PN sequence has an effect of reducing the influence of the external noise applied after code superimposition, and there is a large effect for reliability improvement and precision improvement of the sensor. Even when orthogonal codes having low randomness compared with the PN sequence are used, the band is expanded depending on the selection of the codes, and similar effects in the resistance against the external noise can be obtained by preferentially using the orthogonal codes having an effect to expand bands.

Hereinabove, the PN sequence has been described as a representative of spread codes having randomness. However, any code can be used as long as the code satisfies the above-described three conditions of autocorrelation. Examples of usable codes include JPL sequence and Geffe sequence.

The description above is summarized as follows. That is, a physical-quantity sensor of the present embodiment includes: a first detection element (5) which detects a first physical quantity and receives application of a voltage encoded by a first code; a second detection element (5) which detects a second physical quantity different from the first physical quantity and receives application of a voltage encoded by a second code different from the first code; a first converting unit (10) which converts a first analog signal on which an output voltage from the first detection unit and an output voltage from the second detection unit are superimposed to a first digital signal; a first decoding unit (9) which decodes the first digital signal by the first code; and a second decoding unit (9) which decodes the first digital signal by the second code, and the first code and the second code are spread codes having randomness, respectively.

As described above, even when the spread codes are used instead of the orthogonal codes, by virtue of the high autocorrelation of the spread codes, the signals corresponding to the respective detection elements can be decoded from the first analog signal on which the output voltage from the first detection unit and the output voltage from the second detection unit are superimposed, and the effects of manufacturing cost reduction, precision improvement, and others can be achieved in the same level as the first embodiment. Furthermore, compared with the case in which the orthogonal codes are used, there is an effect of reducing the influence of external noise applied after code superimposition, and there is a large effect in reliability improvement and precision improvement of the sensor.

Fourth Embodiment

In the fourth embodiment, the invention according to the first to third embodiments will be described from a viewpoint of a detecting method of physical quantity.

More specifically, when the physical-quantity sensors according to the first and second embodiments are described from the viewpoint of a detecting method of physical quantity, the method is characterized by including: (a) a step of applying a voltage encoded by a first code to a first electrode of a first detection element having a first movable part which responds to a first physical quantity; (b) a step of applying a voltage encoded by a second code orthogonal to the first code to a second electrode of a second detection element having a second movable part which responds to a second physical quantity different from the first physical quantity; (c) a step of superimposing an output voltage from the first detection element and an output voltage from the second detection element on each other; (d) a step of converting a signal obtained by the superimposition in the step (c) to a first digital signal; (e) a step of decoding the first digital signal by the first code; and (f) a step of decoding the first digital signal by the second code. According to the characteristics, the detection cost of the physical quantities can be reduced, or the detection precision thereof can be improved.

Particularly, the step of superimposing the output voltages from the first and second detection elements in the step (c) can be realized by various circuit configurations. For example, as described with reference to FIG. 5 and FIG. 6, the step may employ a method in which the detection-signal electrode (66) which is commonly connected to the respective detection elements is provided and the signals therefrom are converted by the C/V converting unit (6), with the result that the voltages on which the output voltages from the respective detection elements are superimposed are generated by the C/V converting unit. Alternatively, as described with reference to FIG. 9, the step may employ a method in which the plurality of C/V converting units (97, 101) corresponding to the respective detection elements are provided, the output voltages from the respective detection elements are independently subjected to C/V conversion, and they are superimposed in the subsequent stage thereof.

According to the former method, detection cost can be further reduced by multiplexing the C/V converting unit. According to the latter method, C/V conversion is carried out by appropriate detection ranges corresponding to the respective detection elements, and detection precision can be improved.

Furthermore, when the physical-quantity sensor according to the third embodiment is described from the viewpoint of a detecting method of physical quantity, spread codes having randomness are used as the first code and the second code in the above-described steps (a) and (b) instead of the mutually orthogonal codes. According to the characteristics, the influence of external noise is further reduced, and this further contributes to reliability improvement and precision improvement of physical quantity detection.

Description of Reference Signs

1: voltage-dividing resistance, 2: voltage generating unit, 3: applied-voltage changing switch, 4: detection unit, 5: detection element unit, 6: C/V converting unit, 7: amplifier unit, 8: ADC unit, 9: decoding unit, 10: converting unit, 11: control unit, 51: switch of C/V converting unit, 52: feedback capacitance of C/V converting unit, 53: operational amplifier, 54: feedback switch of amplifier unit, 55: feedback capacitance of amplifier unit, 56: input capacitance of amplifier unit, 57: input switch of amplifier unit, 58: bias voltage of amplifier unit, 59: operational amplifier of amplifier unit, 60: chip, 61: capacitance detecting element, 62: fixed part, 63: movable part, 64: fixed part, 65: carrier-applying electrode, 66: detection-signal electrode, 67: capacitance detecting element, 68: movable part, 69: fixed part, 70: carrier-applying electrode, 71: wiring pattern, 72: 1-chip delay device, 73: multiplier, 74: adder, 75: sample holder, 80: bias-voltage generating unit, 81: AC voltage generating unit, 82: polarity reversing unit, 83: switch unit, 84: detection unit, 85: detection element unit, 86: C/V converting unit, 87: feedback capacitance of C/V converting unit, 88: bias-input-voltage generating unit of C/V converting unit, 89: operational amplifier of C/V converting unit, 90: amplifier unit, 91: input capacitance of amplifier unit, 92: bias-input-voltage generating unit of amplifier unit, 93: feedback capacitance of amplifier unit, 94: operational amplifier of amplifier unit, 95: detection unit, 96: detection element unit, 97: feedback capacitance of first C/V converting unit, 98: feedback switch of first C/V converting unit, 99: feedback capacitance of first C/V converting unit, 100: operational amplifier of first C/V converting unit, 101: second C/V converting unit, 102: feedback switch of second C/V converting unit, 103: feedback capacitance of second C/V converting unit, 104: operational amplifier of second C/V converting unit, 105: amplifier unit, 106: input capacitance from first C/V converting unit, 107: input capacitance from second C/V converting unit, 108: C/V-converting-unit input selecting switch, 109: C/V converting unit, 110: feedback-unit switch of C/V converting unit, 111: first feedback capacitance of C/V converting unit, 112: first feedback capacitance selecting switch of C/V converting unit, 113: second feedback capacitance of C/V converting unit, 114: second feedback capacitance selecting switch of C/V converting unit, 115: operational amplifier of C/V converting unit, 116: voltage switch, 117: MEMS filter, 118: pulse applying unit, 120: input electrode, 121: filter electrode, 122: output electrode, 123: beam part, 131: common electrode, 141: detection element, 142: detection element, 143: circuit unit, F1: code, T1: code, T2: code, S1: signal, N1: signal

**Claims**

1. A physical-quantity sensor comprising:

   a first detection element (5) having a first movable part (63) which is adapted to respond to a first physical quantity and a first electrode to which a voltage encoded by a first code is applied;
   a second detection element having a second movable part (68) which is adapted to respond to a second physical quantity different from the first physical quantity and a second electrode to which a voltage encoded by a second code that is different from the first code is applied;
   a first converting unit (10) which is adapted to receive an output voltage from the first detection element and an output voltage from the second detection element and to convert the output voltages to a first digital signal;
   a first decoding unit (9) which is adapted to decode the first digital signal by the first code; and
   a second decoding unit which is adapted to decode the first digital signal by the second code,
   **characterized by**
   a monitoring unit which is adapted to monitor noise levels or frequency components of respective signals decoded by the first decoding unit (9) and signals decoded by the second decoding unit, wherein
   the monitoring unit is adapted to notify malfunctions when the noise levels or the frequency components exceeds a predetermined threshold value.

2. The physical-quantity sensor according to claim 1, further comprising:

   a third electrode connected to the first detection element (5) and the second detection element; and
   a first C/V converting unit (6) which has an input connected to the third electrode and is adapted to output a voltage on which the output voltage from the first detection element (5) and the output voltage from the second detection element are superimposed.

3. The physical-quantity sensor according to claim 2, further comprising:

   a third detection element having a third movable part which is adapted to respond to angular velocity in a third direction and a fourth electrode to which a voltage encoded by a third code is applied;
   a fourth detection element having a fourth movable part which is adapted to respond to angular velocity in a fourth direction different from the third direction and a fifth electrode to which a voltage encoded by a fourth code orthogonal to the third code is applied;
   a second converting unit which is adapted to receive an output voltage from the third detection element and an output voltage from the fourth detection element and to convert the output voltages to a second digital signal;
   a third decoding unit which is adapted to decode the second digital signal by the third code; and
   a fourth decoding unit which is adapted to decode the second digital signal by the fourth code,
   **characterized in that** the first physical quantity is acceleration in a first direction, and
   the second physical quantity is acceleration in a second direction different from the first direction.

4. The physical-quantity sensor according to claim 1, further comprising:

   a first C/V converting unit (6) which has an input connected to the first detection element (5) and is adapted to output the output voltage from the first detection element; and
   a second C/V converting unit which has an input connected to the second detection element and is adapted to output the output voltage from the second detection element.

5. The physical-quantity sensor according to claim 1, further comprising:

a first C/V converting unit (6) which is adapted to output a first analog signal; and
an input selecting switch (108) which connects an input of the first C/V converting unit (6) and the first detection element (5) or the second detection element,
**characterized in that** the first C/V converting unit (6) has a first capacitance which is selected when the first detection element (5) is connected to the input thereof and a second capacitance which is selected when the second detection element is connected to the input thereof and has a size different from the first capacitance.

6. The physical-quantity sensor according to claim 4 or 5,
**characterized in that** the first physical quantity is acceleration in a first direction parallel to a principal surface of a semiconductor substrate on which the physical-quantity sensor is provided, and
the second physical quantity is acceleration in a second direction perpendicular to the principal surface of the semiconductor substrate.

7. The physical-quantity sensor according to claim 4 or 5,
**characterized in that** the first physical quantity is acceleration, and
the second physical quantity is angular velocity.

8. The physical-quantity sensor according to claim 1, further comprising:

a first MEMS filter (117) which has a plurality of projections and is adapted to apply the voltage encoded by the first code to the first detection element (5); and
a second MEMS filter which has a plurality of projections and is adapted to apply the voltage encoded by the second code to the second detection element.

9. The physical-quantity sensor according to claim 8,
**characterized in that** the first detection element (5), the second detection element, the first MEMS filter (117), and the second MEMS filter are provided on a single chip.

10. The physical-quantity sensor according to claim 8, further comprising:

a sixth electrode which is connected to the first MEMS filter (117) and the second MEMS filter in order to apply the same pulse to the first MEMS filter (117) and the second MEMS filter.

11. The physical-quantity sensor according to claim 1,
**characterized in that** each component of the first code and the second code is composed of 1 or -1.

12. The physical-quantity sensor according to claim 1,
**characterized in that** each of the first code and the second code is a code having a variable code length.

13. The physical-quantity sensor according to claim 1, wherein
the first code and the second code are orthogonal codes.

14. The physical-quantity sensor according to claim 13,
**characterized in that** the first code and the second code are Hadamard orthogonal codes.

15. The physical-quantity sensor according to claim 1, wherein
the first code and the second code are spread codes having randomness.

16. The physical-quantity sensor according to claim 1,
**characterized in that** the monitoring unit is adapted to detect malfunctions in the first detection element (5) based on the noise levels or the frequency components of the signals decoded by the second decoding unit, and
to detect malfunctions in the second detection element based on the noise levels or the frequency components of the signals decoded by the first decoding unit (9).

**17.** A detecting method of physical quantity, comprising:

(a) a step of applying a voltage encoded by a first code to a first electrode of a first detection element (5) having a first movable part (63) which responds to a first physical quantity;

(b) a step of applying a voltage encoded by a second code that is different from the first code to a second electrode of a second detection element having a second movable part (68) which responds to a second physical quantity different from the first physical quantity;

(c) a step of superimposing an output voltage from the first detection element (5) and an output voltage from the second detection element on each other;

(d) a step of converting a signal obtained by the superimposition in the step (c) to a first digital signal;

(e) a step of decoding the first digital signal by the first code;

(f) a step of decoding the first digital signal by the second code;

**characterized by**

(g) a step of monitoring noise levels or frequency components of the respective signals decoded in steps (e) and (f); and

(h) a step of notifying malfunctions when the noise levels or the frequency components exceeds a predetermined threshold value.

**Patentansprüche**

**1.** Sensor für physikalische Größen, der umfasst:

ein erstes Detektionselement (5), das einen ersten beweglichen Teil (63), der dafür ausgelegt ist, auf eine erste physikalische Größe zu reagieren, und eine erste Elektrode, an die eine mit einem ersten Code codierte Spannung angelegt wird, besitzt;

ein zweites Detektionselement, das einen zweiten beweglichen Teil (68), der dafür ausgelegt ist, auf eine von der ersten physikalischen Größe verschiedene zweite physikalische Größe zu reagieren, und eine zweite Elektrode, an die eine Spannung, die mit einem von dem ersten Code verschiedenen zweiten Code codiert ist, angelegt wird, besitzt;

eine erste Umsetzungseinheit (10), die dafür ausgelegt ist, von dem ersten Detektionselement eine Ausgangsspannung und von dem zweiten Detektionselement eine zweite Ausgangsspannung zu empfangen und die Ausgangsspannungen in ein erstes digitales Signal umzusetzen;

eine erste Decodierungseinheit (9), die dafür ausgelegt ist, das erste digitale Signal mit dem ersten Code zu decodieren; und

eine zweite Decodierungseinheit, die dafür ausgelegt ist, das erste digitale Signal mit dem zweiten Code zu decodieren,

**gekennzeichnet durch**

eine Überwachungseinheit, die dafür ausgelegt ist, Rauschpegel oder Frequenzkomponenten jeweiliger Signale, die **durch** die erste Decodierungseinheit (9) decodiert worden sind, und jeweiliger Signale, die **durch** die zweite Decodierungseinheit decodiert worden sind, zu überwachen, wobei

die Überwachungseinheit dafür ausgelegt ist, Fehlfunktionen zu melden, wenn die Rauschpegel oder die Frequenzkomponenten einen vorgegebenen Schwellenwert überschreiten.

**2.** Sensor für physikalische Größen nach Anspruch 1, der ferner umfasst:

eine dritte Elektrode, die mit dem ersten Detektionselement (5) und mit dem zweiten Detektionselement verbunden ist; und

eine erste C/V-Umsetzungseinheit (6), die einen mit der dritten Elektrode verbundenen Eingang besitzt und dafür ausgelegt ist, eine Spannung auszugeben, der die Ausgangsspannung des ersten Detektionselements (5) und die Ausgangsspannung des zweiten Detektionselements überlagert werden.

**3.** Sensor für physikalische Größen nach Anspruch 2, der ferner umfasst:

ein drittes Detektionselement, das einen dritten beweglichen Teil, der dafür ausgelegt ist, auf eine Winkelgeschwindigkeit in einer dritten Richtung zu reagieren, und eine vierte Elektrode, an die eine mit einem dritten Code codierte Spannung angelegt wird, besitzt;

ein viertes Detektionselement, das einen vierten beweglichen Teil, der dafür ausgelegt ist, auf eine Winkelgeschwindigkeit in einer von der dritten Richtung verschiedenen vierten Richtung zu reagieren, und eine fünfte Elektrode, an die eine Spannung, die mit einem zum dem dritten Code orthogonalen vierten Code codiert ist, angelegt wird, besitzt;

eine zweite Umsetzungseinheit, die dafür ausgelegt ist, eine Ausgangsspannung von dem dritten Detektionselement und eine Ausgangsspannung von dem vierten Detektionselement zu empfangen und die Ausgangsspannungen in ein zweites digitales Signal umzusetzen;

eine dritte Decodierungseinheit, die dafür ausgelegt ist, das zweite digitale Signal mit dem dritten Code zu decodieren;

eine vierte Decodierungseinheit, die dafür ausgelegt ist, das zweite digitale Signal mit dem vierten Code zu decodieren,

**dadurch gekennzeichnet, dass** die erste physikalische Größe eine Beschleunigung in einer ersten Richtung ist und

die zweite physikalische Größe eine Beschleunigung in einer von der ersten Richtung verschiedenen zweiten Richtung ist.

4. Sensor für physikalische Größen nach Anspruch 1, der ferner umfasst:

eine erste C/V-Umsetzungseinheit (6), die einen Eingang besitzt, der mit dem ersten Detektionselement (5) verbunden ist, und die dafür ausgelegt ist, die Ausgangsspannung von dem ersten Detektionselement auszugeben; und

eine zweite C/V-Umsetzungseinheit, die einen Eingang besitzt, der mit dem zweiten Detektionselement verbunden ist, und die dafür ausgelegt ist, die Ausgangsspannung von dem zweiten Detektionselement auszugeben.

5. Sensor für physikalische Größen nach Anspruch 1, der ferner umfasst:

eine erste C/V-Umsetzungseinheit (6), die dafür ausgelegt ist, ein erstes analoges Signal auszugeben; und

einen Eingangswählschalter (108), der einen Eingang der ersten C/V-Umsetzungseinheit (6) und das erste Verbindungselement (5) oder das zweite Verbindungselement verbindet,

**dadurch gekennzeichnet, dass** die erste C/V-Umsetzungseinheit (6) eine erste Kapazität besitzt, die gewählt wird, wenn das erste Detektionselement (5) mit ihrem Eingang verbunden ist, und eine zweite Kapazität besitzt, die gewählt wird, wenn das zweite Detektionselement mit ihrem Eingang verbunden ist, und die eine von der ersten Kapazität verschiedene Größe besitzt.

6. Sensor für physikalische Größen nach Anspruch 4 oder 5,

**dadurch gekennzeichnet, dass** die erste physikalische Größe eine Beschleunigung in einer ersten Richtung parallel zu einer Hauptoberfläche eines Halbleitersubstrats, auf dem der Sensor für physikalische Größen vorgesehen ist, ist und

die zweite physikalische Größe eine Beschleunigung in einer zu der Hauptoberfläche des Halbleitersubstrats senkrechten Richtung ist.

7. Sensor für pyhsikalische Größe nach Anspruch 4 oder 5,

**dadurch gekennzeichnet, dass** die erste physikalische Größe eine Beschleunigung ist und

die zweite physikalische Größe eine Winkelgeschwindigkeit ist.

8. Sensor für physikalische Größen nach Anspruch 1, der ferner umfasst:

ein erstes MEMS-Filter (117), das mehrere Vorsprünge besitzt und dafür ausgelegt ist, die mit dem ersten Code codierte Spannung an das erste Detektionselement (5) anzulegen; und

ein zweites MEMS-Filter, das mehrere Vorsprünge besitzt und dafür ausgelegt ist, die mit dem zweiten Code codierte Spannung an das zweite Detektionselement anzulegen.

9. Sensor für physikalische Größen nach Anspruch 8,

**dadurch gekennzeichnet, dass** das erste Detektionselement (5), das zweite Detektionselement, das erste MEMS-Filter (117) und das zweite MEMS-Filter auf einem einzigen Chip vorgesehen sind.

10. Sensor für physikalische Größen nach Anspruch 8, der ferner umfasst:

eine sechste Elektrode, die mit dem ersten MEMS-Filter (117) und mit dem zweiten MEMS-Filter verbunden ist, um an das erste MEMS-Filter (117) und das zweite MEMS-Filter denselben Impuls anzulegen.

11. Sensor für physikalische Größen nach Anspruch 1,
**dadurch gekennzeichnet, dass** jede Komponente des ersten Codes und des zweiten Codes aus 1 oder -1 aufgebaut ist.

12. Sensor für physikalische Größen nach Anspruch 1,
**dadurch gekennzeichnet, dass** sowohl der erste Code als auch der zweite Code ein Code mit variabler Codelänge ist.

13. Sensor für physikalische Größen nach Anspruch 1, wobei der erste Code und der zweite Code orthogonale Codes sind.

14. Sensor für physikalische Größen nach Anspruch 13,
**dadurch gekennzeichnet, dass** der erste Code und der zweite Code orthogonale Hadamard-Codes sind.

15. Sensor für physikalische Größen nach Anspruch 1, wobei der erste Code und der zweite Code Spreizcodes mit Zufälligkeit sind.

16. Sensor für physikalische Größen nach Anspruch 1,
**dadurch gekennzeichnet, dass** die Überwachungseinheit dafür ausgelegt ist, Fehlfunktionen in dem ersten Detektionselement (5) anhand der Rauschpegel oder der Frequenzkomponenten der Signale, die mit der zweiten Decodierungseinheit decodiert werden, zu detektieren, und Fehlfunktionen in dem zweiten Detektionselement anhand der Rauschpegel oder der Frequenzkomponenten der Signale, die mit der ersten Decodierungseinheit (9) decodiert werden, zu detektieren.

17. Verfahren zum Detektieren physikalischer Größen, das Folgendes umfasst:

(a) einen Schritt des Anlegens einer mit einem ersten Code codierten Spannung an eine erste Elektrode eines ersten Detektionselements (5), das einen ersten beweglichen Teil (63) besitzt, der auf eine erste physikalische Größe reagiert;
(b) einen Schritt des Anlegens einer Spannung, die mit einem von dem ersten Code verschiedenen zweiten Code codiert ist, an eine zweite Elektrode eines zweiten Detektionselements, das einen zweiten beweglichen Teil (68) besitzt, der auf eine von der ersten physikalische Größe verschiedene zweite physikalische Größe reagiert;
(c) einen Schritt des Überlagerns einer Ausgangsspannung des ersten Detektionselements (5) und einer Ausgangsspannung des zweiten Detektionselements miteinander;
(d) einen Schritt des Umsetzens eines Signals, das durch die Überlagerung im Schritt (c) erhalten wird, in ein erstes digitales Signal;
(e) einen Schritt des Decodierens des ersten digitalen Signals mit dem ersten Code;
(f) einen Schritt des Decodierens des ersten digitalen Signals mit dem zweiten Code;
**gekennzeichnet durch**
(g) einen Schritt des Überwachens von Rauschpegeln oder Frequenzkomponenten der jeweiligen Signale, die in den Schritten (e) bzw. (f) decodiert worden sind; und
(h) einen Schritt des Meldens von Fehlfunktionen, wenn die Rauschpegel oder die Frequenzkomponenten einen vorgegebenen Schwellenwert überschreiten.

**Revendications**

1. Capteur de quantité physique comprenant :

un premier élément de détection (5) ayant une première partie mobile (63) qui est adaptée à réagir à une première quantité physique et une première électrode à laquelle est appliqué un voltage codé par un premier code ;
un second élément de détection ayant une seconde partie mobile (68) qui est adaptée à réagir à une seconde quantité physique différente de la première quantité physique et une seconde électrode à laquelle est appliqué un voltage codé par un second code qui est différent du premier code ;
une première unité de conversion (10) qui est adaptée à recevoir un voltage de sortie venant du premier élément de détection et un voltage de sortie venant du second élément de détection et à convertir les voltages de sortie en un premier signal numérique ;
une première unité de décodage (9) qui est adaptée à décoder le premier signal numérique par le premier code ; et
une seconde unité de décodage qui est adaptée à décoder le premier signal numérique par le second code, **caractérisé par**
une unité de surveillance qui est adaptée à surveiller des niveaux de bruit ou des composantes de fréquence de signaux respectifs décodés par la première unité de décodage (9) et de signaux décodés par la seconde unité de décodage,
dans lequel l'unité de surveillance est adaptée à notifier des dysfonctionnements quand les niveaux de bruit ou les composantes de fréquence excèdent une valeur seuil prédéterminée.

2. Capteur de quantité physique selon la revendication 1, comprenant en outre :

une troisième électrode connectée au premier élément de détection (5) et au second élément de détection ; et
une première unité de conversion C/V (6) qui possède une entrée connectée à la troisième électrode et qui est adaptée à délivrer un voltage sur lequel sont superposés le voltage de sortie venant du premier élément de détection (5) et le voltage de sortie venant du second élément de détection.

3. Capteur de quantité physique selon la revendication 2, comprenant en outre :

un troisième élément de détection ayant une troisième partie mobile qui est adaptée à réagir à une vitesse angulaire dans une troisième direction, et une quatrième électrode à laquelle est appliqué un voltage codé par un troisième code ;
un quatrième élément de détection ayant une quatrième partie mobile qui est adaptée à réagir à une vitesse angulaire dans une quatrième direction différente de la troisième direction, et une cinquième électrode à laquelle est appliqué un voltage codé par un quatrième code, orthogonal au troisième code ;
une seconde unité de conversion qui est adaptée à recevoir un voltage de sortie venant du troisième élément de détection et un voltage de sortie venant du quatrième élément de détection, et à convertir les voltages de sortie en un second signal numérique ;
une troisième unité de décodage qui est adaptée à décoder le second signal numérique par le troisième code ; et
une quatrième unité de décodage qui est adaptée à décoder le second signal numérique par le quatrième code, **caractérisé en ce que** la première quantité physique est l'accélération dans une première direction, et
la seconde quantité physique est l'accélération dans une seconde direction différente de la première direction.

4. Capteur de quantité physique selon la revendication 1, comprenant en outre :

une première unité de conversion C/V (6) qui a une entrée connectée au premier élément de détection (5) et qui est adaptée à délivrer le voltage de sortie venant du premier élément de détection ; et
une seconde unité de conversion C/V qui a une entrée connectée au second élément de détection et qui est adaptée à délivrer le voltage de sortie venant du second élément de détection.

5. Capteur de quantité physique selon la revendication 1, comprenant en outre :

une première unité de conversion C/V (6) qui est adaptée à délivrer un premier signal analogique ; et
un commutateur de sélection d'entrée (108) qui connecte une entrée de la première unité de conversion C/V (6) et le premier élément de détection (5) ou le second élément de détection,
**caractérisé en ce que** la première unité de conversion C/V (6) a une première capacité qui est sélectionnée quand le premier élément de détection (5) est connecté à l'entrée de celle-ci, et une seconde capacité qui est sélectionnée quand le second élément de détection est connecté à l'entrée de celle-ci, et qui a une taille différente de la première capacité.

6. Capteur de quantité physique selon la revendication 4 ou 5, **caractérisé en ce que** la première quantité physique est l'accélération dans une première direction parallèle à une surface principale d'un substrat semi-conducteur sur lequel est prévu le capteur de quantité physique, et
la seconde quantité physique est l'accélération dans une seconde direction perpendiculaire à la surface principale du substrat semiconducteur.

7. Capteur de quantité physique selon la revendication 4 ou 5, **caractérisé en ce que** la première quantité physique est l'accélération, et la seconde quantité physique est une vitesse angulaire.

8. Capteur de quantité physique selon la revendication 1, comprenant en outre :

   un premier filtre MEMS (117) qui a une pluralité de projections et qui est adapté à appliquer le voltage codé par le premier code au premier élément de détection (5) ; et
   un second filtre MEMS qui a une pluralité de projections et qui est adapté à appliquer le voltage codé par le second code au second élément de détection.

9. Capteur de quantité physique selon la revendication 8,
   **caractérisé en ce que** le premier élément de détection (5) le second élément de détection, le premier filtre MEMS (117), et le second filtre MEMS sont prévus sur une puce unique.

10. Capteur de quantité physique selon la revendication 8, comprenant en outre :

    une sixième électrode qui est connectée au premier filtre MEMS (117) et au second filtre MEMS afin d'appliquer la même impulsion au premier filtre MEMS (117) et au second filtre MEMS.

11. Capteur de quantité physique selon la revendication 1,
    **caractérisé en ce que** chaque composant du premier code et du second code est composé de 1 ou -1.

12. Capteur de quantité physique selon la revendication 1,
    **caractérisé en ce que** chacun du premier code et du second code est un code ayant une longueur de code variable.

13. Capteur de quantité physique selon la revendication 1,
    dans lequel le premier code et le second code sont des codes orthogonaux.

14. Capteur de quantité physique selon la revendication 13,
    **caractérisé en ce que** le premier code et le second code sont des codes orthogonaux de Hadamard.

15. Capteur de quantité physique selon la revendication 1,
    dans lequel le premier code et le second code des codes à étalement présentant un caractère aléatoire.

16. Capteur de quantité physique selon la revendication 1,
    **caractérisé en ce que** l'unité de surveillance est adaptée à détecter des dysfonctionnements dans le premier élément de détection (5) en se basant sur les niveaux de bruit ou sur les composantes de fréquence des signaux décodés par la seconde unité de décodage, et
    à détecter des dysfonctionnements dans le second élément de détection en se basant sur les niveaux de bruit ou sur les composantes de fréquence des signaux décodés par la première unité de décodage (9).

17. Procédé de détection de quantité physique, comprenant :

    (a) une étape consistant à appliquer un voltage codé par un premier code à une première électrode d'un premier élément de détection (5) ayant une première partie mobile (63) qui réagit à une première quantité physique ;
    (b) une étape consistant à appliquer un voltage codé par un second code qui est différent du premier code à une seconde électrode d'un second élément de détection ayant une seconde partie mobile (68) qui réagit à une seconde quantité physique différente de la première quantité physique ;
    (c) une étape consistant à superposer un voltage de sortie venant du premier élément de détection (5) et un voltage de sortie venant du second élément de détection l'un sur l'autre ;
    (d) une étape consistant à convertir un signal obtenu par la superposition dans l'étape (c) en un premier signal numérique ;
    (e) une étape consistant à décoder le premier signal numérique par le premier code ;
    (f) une étape consistant à décoder le premier signal numérique par le second code ;
    **caractérisé par**
    (g) une étape consistant à surveiller les niveaux de bruit ou les composantes de fréquence des signaux respectifs décodés dans les étapes (e) et (f) ; et

(h) une étape consistant à notifier des dysfonctionnements quand les niveaux de bruit ou les composantes de fréquence excèdent une valeur seuil prédéterminée.

*FIG. 1*

*FIG. 2*

FIG. 3

FIG. 4

FIG. 5

EP 2 730 928 B1

FIG. 6

EP 2 730 928 B1

FIG. 7

EP 2 730 928 B1

FIG. 8

FIG. 9

FIG. 10

FIG. 11

EP 2 730 928 B1

FIG. 12

FIG. 13

EP 2 730 928 B1

FIG. 14

EP 2 730 928 B1

**EP 2 730 928 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007240518 A
- JP 2003215156 A

- JP 2009005103 A

**Non-patent literature cited in the description**

- **PAAVOLA M. ; KAMARAINEN M. ; JARVINEN J.A.M. ; SAUKOSKI M. ; LAIHO M ; HALONEN K.A.I.** A Micropower Interface ASIC for a Capacitive 3-Axis Micro-Accelerometer. *Solid-State Circuits, IEEE Journal,* December 2007, vol. 42 (12), 2651-2665

38